# EUROPÄISCHE PATENTSCHRIFT

(11) **EP 1 719 200 B1**
(45) Veröffentlichungstag und Bekanntmachung des Hinweises auf die Patenterteilung: **30.08.2017**
(21) Anmeldenummer: 05707542.6
(22) Anmeldetag: 20.02.2005
(51) Int. Cl.: H01M 8/1081, H01M 8/1072, H01M 8/1048, H01M 8/1044, H01M 8/1034, H01M 8/1032, H01M 8/103, H01M 8/1027, H01M 8/1004, H01M 4/90, H01M 4/92, H01M 4/86, H01M 4/88

(54) **MEMBRAN-ELEKTRODEN-EINHEIT MIT HOHER LEISTUNG UND DEREN ANWENDUNG IN BRENNSTOFFZELLEN**
HIGH-PERFORMANCE MEMBRANE ELECTRODE UNIT AND THE USE THEREOF IN FUEL CELLS
UNITÉ MEMBRANE-ÉLECTRODES À PUISSANCE ÉLEVÉE ET SON UTILISATION DANS DES PILES A COMBUSTIBLE

(30) Priorität: 21.02.2004 DE 102004008628
(43) Veröffentlichungstag der Anmeldung: 08.11.2006
(60) Teilanmeldung: 10006479.9
(73) Patentinhaber: BASF Fuel Cell Research GmbH, 67056 Ludwigshafen (DE)
(72) Erfinder: SCHMIDT, Thomas, 60594 Frankfurt (DE); UENSAL, Oemer, 55128 Mainz (DE); WEBER, Mathias, 65428 Rüsselsheim (DE); KUNDLER, Isabel, 61462 Königstein (DE); CALUNDANN, Gordon c/o Pemeas USA,Inc, Somerset, NJ 08873 (US); BAURMEISTER, Jochen, 65817 Eppstein (DE)
(74) Vertreter: Mai Dörr Besier European Patent Attorneys
(86) Internationale Anmeldenummer: PCT/EP2005/001761
(87) Internationale Veröffentlichungsnummer: WO 2005/081351

(56) Entgegenhaltungen:
- WO-A-01/18894
- WO-A-2004/034498
- DE-A1- 10 235 356
- US-A- 4 333 805
- US-A- 5 759 944
- COSTAMAGNA P ET AL: "Quantum jumps in the PEMFC science and technology from the 1960s to the year 2000 - Part I. Fundamental scientific aspects" JOURNAL OF POWER SOURCES, ELSEVIER, AMSTERDAM, NL, Bd. 102, Nr. 1-2, 1. Dezember 2001 (2001-12-01), Seiten 242-252, XP004331043 ISSN: 0378-7753

## Beschreibung

Die vorliegende Erfindung betrifft Membran-Elektroden-Einheiten mit hoher Leistung, die insbesondere in sogenannten Polymerelektrolytmembran-Brennstoffzellen eingesetzt werden können.

Eine Brennstoffzelle enthält üblicherweise einen Elektrolyten und zwei durch den Elektrolyten getrennte Elektroden, bei denen einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt wird. Die durch die resultierende Brennstoffoxidation entstehende chemische Energie wird dabei direkt in elektrische Energie umgewandelt.

Eine Forderung an den Elektrolyten ist, daß dieser für Wasserstoffionen, d.h. Protonen, nicht aber für die vorstehend genannten Brennstoffe durchlässig ist.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt.

Polymerelektrolytmembranen mit Komplexen aus basischen Polymeren und starken Säuren sind beispielsweise aus WO96/13872 bekannt. Zu deren Herstellung wird ein basisches Polymer, beispielsweise Polybenzimidazol, mit einer starken Säure, wie Phosphorsäure, behandelt.

Des weiteren sind, beispielsweise aus US-A-4,017,664, auch Brennstoffzellen bekannt, deren Membran anorganische Trägermaterialien, wie beispielsweise Glasfasergewebe oder Glasfaservliese, umfassen, die mit Phosphorsäure getränkt sind.

Aus WO 01/18894 sind Membran-Elektroden-Einheiten, die Polymermembranen auf Basis von Polyazolen aufweisen, bereits bekannt. Die Herstellung der Polymermembran erfolgt über das Polymer und den klassischen Gießfolien Prozess, d.h. die Polymermembran wird nachträglich dotiert. Katalysatoren auf Basis von Platin/Nickel-Legierungen werden nicht offenbart.

Das U.S. Patent 5759944 offenbart Katalysatoren umfassend Platin und ein anderes "alloying" Metall in Kombination mit Gold in phosphoric acid fuel cell (PAFC). PAFC weisen keine Polymer-Elektrolyt Membranen auf.

Das aus WO 02/088219 hervorgegangene Europäischen Patent Nr. 1379573 B1 offenbart Membran-Elektroden-Einheiten und Polymermembranen gemäß dem Oberbegriff des Anspruches 1. Katalysatoren auf Basis von Platin/Nickel-Legierungen werden nicht offenbart.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) üblicherweise nach der Formgebung der Polyazolfolie beigefügt. Das Polymer dient dabei als Träger für den Elektrolyten bestehend aus der hochkonzentrierten Phosphorsäure. Die Polymermembran erfüllt dabei weitere wesentliche Funktionen, insbesondere muss sie eine hohe mechanische Stabilität aufweisen und als Separator für die beiden eingangs genannten Brennstoffe dienen.

Wesentliche Vorteile einer solchen Phosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Die Leistung einer Membran-Elektroden-Einheit hergestellt mit solchen Membranen ist in WO 01/18894 und in Electrochimica Acta, Band 41, 1996, 193-197 beschrieben und liegen bei einer Platinbeladung von 0,5 mg/cm² (Anode) und 2 mg/cm² (Kathode) kleiner als 0,2 A/cm² bei einer Spannung von 0,6 V. Bei Verwendung von Luft anstelle von Sauerstoff sinkt dieser Wert auf kleiner als 0,1 A/cm² ab.

Ein großer Vorteil von Brennstoffzellen ist die Tatsache, dass bei der elektrochemischen Reaktion die Energie des Brennstoffes direkt in elektrische Energie und Wärme umgewandelt wird. Als Reaktionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss ein Teil der bei der Reaktion entstehenden Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Die zuvor dargelegten Membran-Elektroden-Einheiten weisen bereits ein gutes Eigenschaftsprofil aus, wobei jedoch die Leistungsfähigkeit, beispielsweise die Stromdichte bei hohen Spannungen von bekannten Membran-Elektroden-Einheiten noch zu verbessern ist.

Eine weitere Aufgabe bestand darin eine Membran-Elektroden-Einheit bereitzustellen, die eine hohe Leistungsfähigkeit, insbesondere eine hohe Stromdichte bzw. bei einer hohen Spannung eine hohe Stromdichte,
über einen weiten Temperaturbereich zeigt

Darüber hinaus muss die erfindungsgemäße Membran-Elektroden-Einheit eine hohe Haltbarkeit, insbesondere eine lange Lebensdauer bei den geforderten hohen Leistungsdichten aufweisen.

Ein permanente Aufgabe bei allen Membran-Elektroden-Einheit besteht darin, die Mengen an Katalysatoren zu reduzieren um die Herstellkosten zu vermindern, ohne dass dabei die Leistungsfähigkeit signifikant vermindert wird. Vorteilhafterweise soll die Membran-Elektroden-Einheit bei geringem Gasfluß und/oder bei geringem Überdruck mit einer hohen Leistungsdichte betrieben werden können.

Der vorliegenden Erfindung liegt daher die Aufgabe zugrunde, eine neuartige Membran-Elektroden-Einheit bereitzustellen, die die zuvor dargelegten Aufgaben löst.

Gegenstand der vorliegenden Erfindung ist eine Membran-Elektroden-Einheit gemäß Anspruch 1.

Die erfindungsgemäßen Membran-Elektroden-Einheit liefert hohe Stromstärken ohne dass dabei die Spannung allzu sehr abfällt. Ferner weisen die erfindungsgemäßen Membran-Elektroden-Einheiten eine gute Haltbarkeit bei hohen Stromstärken auf.

Ein wesentlicher Aspekt und technischer Vorteil der erfindungsgemäßen Membran-Elektroden-Einheit liegt darin, daß die hervorragende Leistungsfähigkeit mit einem bis dahin noch nicht erreichten geringen Gehalt an katalytisch aktiven Substanzen, wie beispielsweise Platin erzielt wird.

Die in der erfindungsgemäßen Membran-Elektroden-Einheit enthaltenen Polymermembran werden in Anspruch 1 näher beschrieben.

Polymere auf Basis von Polyazol enthalten im allgemeinen wiederkehrende Azoleinheiten der allgemeinen Formel (I) und/oder (11) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 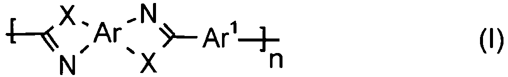 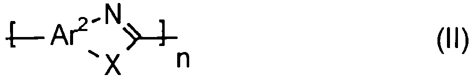 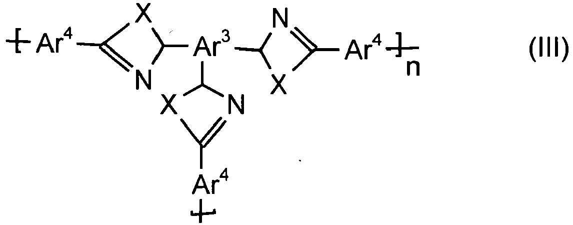 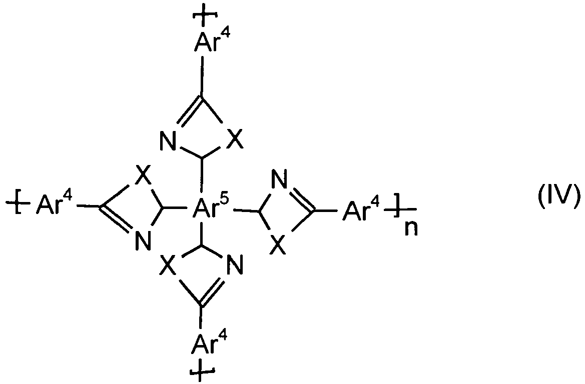 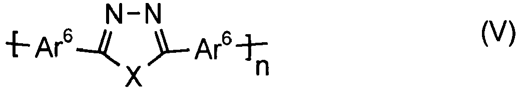 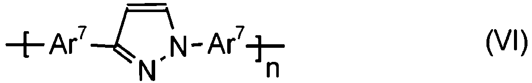 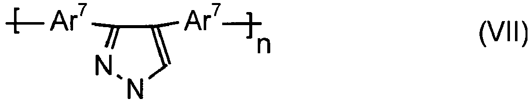 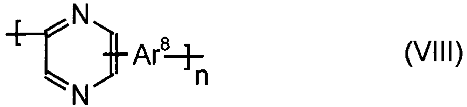 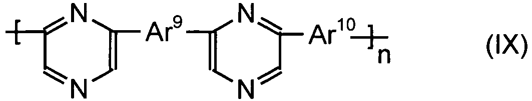 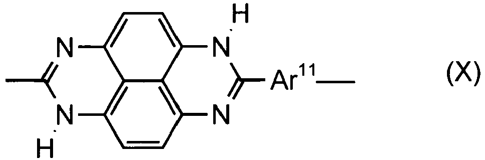 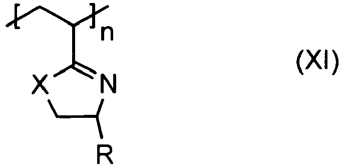 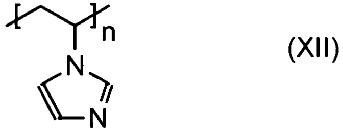 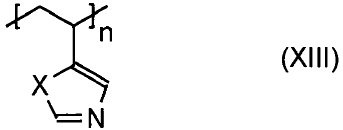 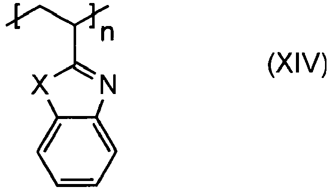 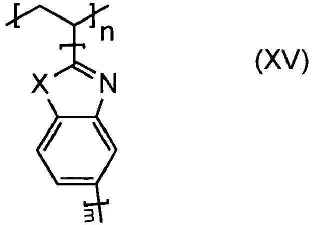 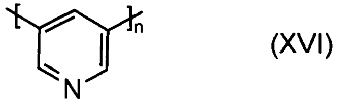 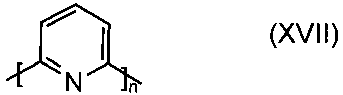 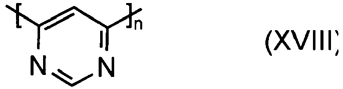 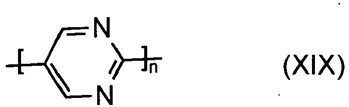 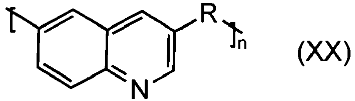 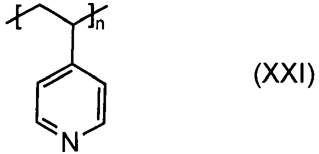 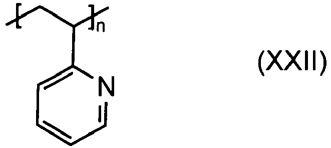 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht, mit der Maßgabe das R in der Formel (XX) nicht für Wasserstoff steht und
- n, m: eine ganze Zahl größer gleich 10, bevorzugt größer gleich 100 ist.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrenden Benzimidazoleinheiten werden durch die nachfolgende Formeln wiedergegeben: 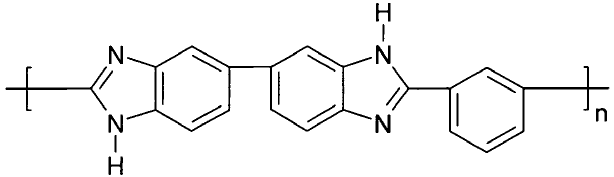 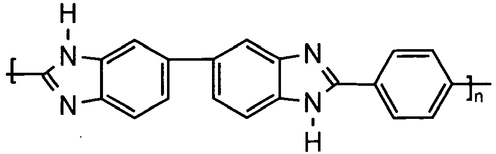 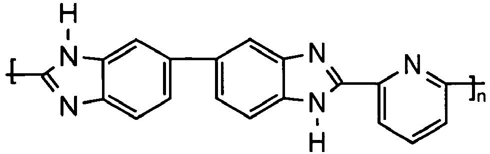 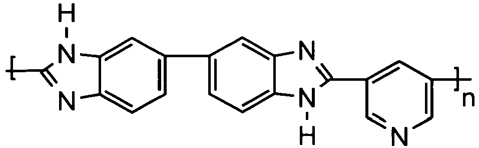 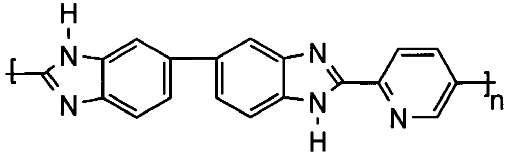 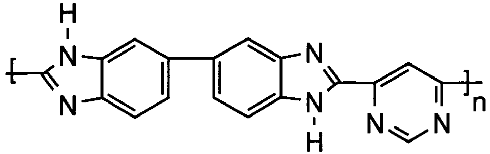 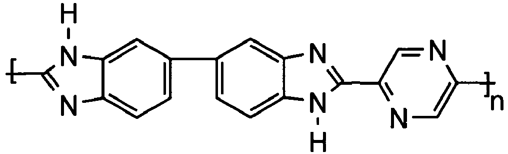 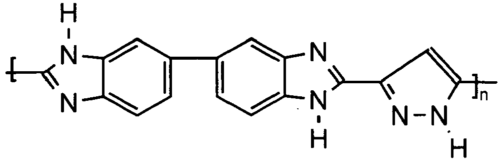 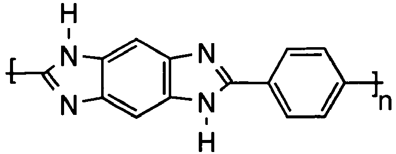 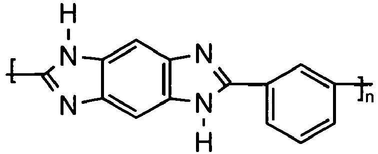 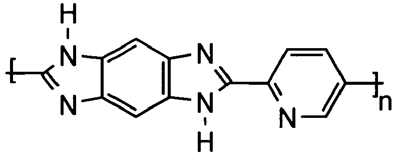 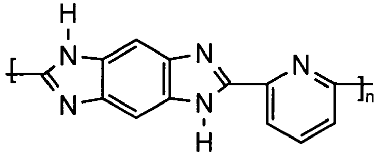 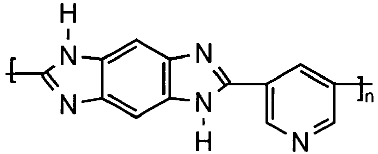 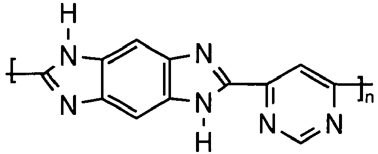 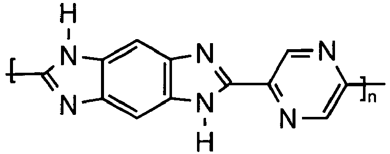 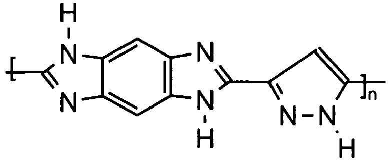 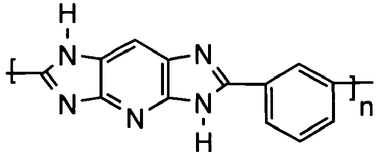 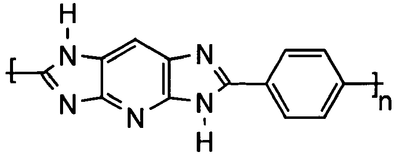 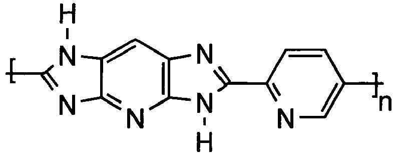 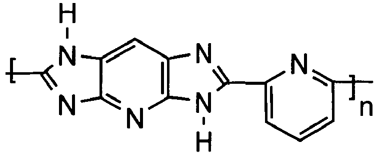 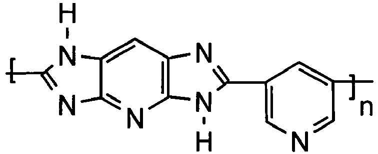 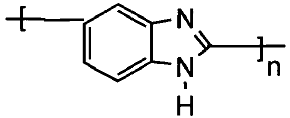 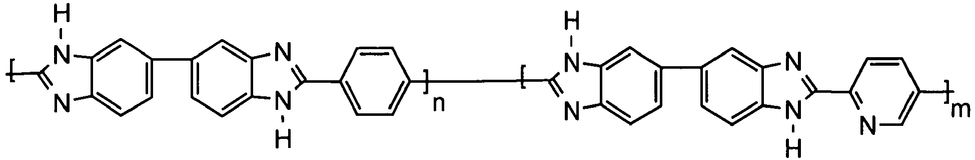 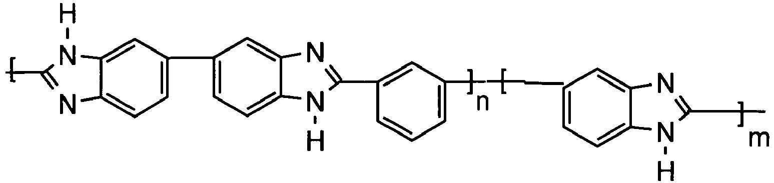 wobei n und m eine ganze Zahl größer gleich 10, vorzugsweise größer gleich 100 ist.

Weitere bevorzugte Polyazol-Polymere sind Polyimidazole, Polybenzimidazoletherketon, Polybenzthiazole, Polybenzoxazole, Polytriazole, Polyoxadiazole, Polythiadiazole, Polypyrazole, Polyquinoxalines, Poly(pyridine), Poly(pyrimidine), und Poly(tetrazapyrene).

Bevorzugte Polyazole zeichnen sich durch ein hohes Molekulargewicht aus. Dies gilt insbesondere für die Polybenzimidazole. Gemessen als Intrinsische Viskosität liegt diese im Bereich von 0,3 bis 10 dl/g, vorzugsweise 1 bis 5 dl/g.

Besonders bevorzugt ist Celazole der Fa. Celanese. Die Eigenschaften der Polymerfolie und Polymermembran können durch Sieben des Ausgangspolymers, wie in der deutschen Patentanmeldung Nr. 10129458.1 beschrieben, verbessert werden.

Ganz besonders bevorzugt werden para-Polybenzimidazole bei der Herstellung der Polymerelektrolytmembranen eingesetzt. Hierbei umfassen die Polybenzimidazole insbesondere sechsgliederige aromatische Gruppen, die in 1,4 Stellung verknüpft sind. Besonders bevorzugt wird Poly[2,2'-(p-phenylene)-5,5'-bisbenzimidazol] eingesetzt.

Zur weiteren Verbesserung der anwendungstechnischen Eigenschaften kann das flächige Material Füllstoffe, insbesondere protonenleitende Füllstoffe, aufweisen.

Nicht limitierende Beispiele für Protonenleitende Füllstoffe sind

| | |
|---|---|
| Sulfate wie: | CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄, |
| Phosphate wie | Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀, |
| Polysäure wie | H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄ |
| Selenite und Arsenide wie | (NH₄)₃H(SeO₄)₂, UO₂AsO₄, (NH₄)₃H(SeO₄)₂, KH₂AsO₄, Cs₃H(SeO₄)₂, Rb₃H(SeO₄)₂, |
| Phosphide wie | ZrP, TiP, HfP |
| Oxide wie | Al₂O₃, Sb₂O₅, ThO₂, SnO₂, ZrO₂, MoO₃ |
| Silikate wie | Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite |
| Säuren wie | HClO₄, SbF₅ |
| Füllstoffe wie | Carbide, insbesondere SiC, Si₃N₄, Fasern, insbesondere Glasfasern, Glaspulvern und/oder Polymerfasern, bevorzugt auf Basis von Polyazolen. |

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfasst die Membran höchstens 80 Gew.-%, vorzugsweise höchstens 50 Gew.-% und besonders bevorzugt höchstens 20 Gew.-% Additive.

Im Rahmen der vorliegenden Beschreibung versteht man unter "Phosphorsäure" Polyphosphorsäure (Hₙ₊₂PₙO₃ₙ₊₁ (n>1) üblicherweise mit einem Gehalt berechnet als P₂O₅ (acidimetrisch) von mindestens 83%).

Die Polymermembranen werden durch ein Verfahren erhalten umfassend die Schritte gemäß Anspruch 1.

Hierzu können der Mischung gemäß Schritt i) ein oder mehrere Verbindungen beigefügt werden, die unter Einwirkung von Wärme gemäß Schritt ii) zur Bildung von Polyazolen geeignet sind.

Hierzu sind Mischungen geeignet, die ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen. Des weiteren können ein oder mehrere aromatische und/oder heteroaromatische Diaminocarbonsäuren zur Herstellung von Polyazolen eingesetzt werden.

Zu den aromatischen und heteroaromatischen Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Des weiteren kann die Mischung i) aromatische und/oder heteroaromatische Carbonsäuren umfassen. Hierbei handelt es sich um Dicarbonsäuren und Tricarbonsäuren und Tetracarbonsäuren bzw. deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Ganz besonders bevorzugt werden Mischungen eingesetzt, die Dicarbonsäuren umfassen, deren Säurereste in para-Stellung stehen, wie beispielsweise Terephthalsäure.

Bei den heteroaromatischen Carbonsäuren handelt es sich um heteroaromatischen Dicarbonsäuren und Tricarbonsäuren und Tetracarbonsäuren bzw. deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 - Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-ArylEster, oder deren Säureanhydride oder deren Säurechloride.

Des weiteren kann die Mischung i) auch aromatische und heteroaromatische Diaminocarbonsäuren enthalten. Zu diesen gehört unter anderem Diaminobenzoesäure, 4-Phenoxycarbonyl-3,'4'-diaminodiphenylether und deren Mono- und Dihydrochloridderivate.

Die in Schritt i) hergestellte Mischung umfasst vorzugsweise mindestens
0,5 Gew.-%, insbesondere 1 bis 30 Gew.-% und besonders bevorzugt 2 bis
15 Gew.-% Monomere zur Herstellung von Polyazolen.

Gemäß einem weiteren Aspekt der vorliegenden Erfindung umfasst die in Schritt i) hergestellte Mischung Verbindungen, die unter Einwirkung von Wärme gemäß Schritt ii) zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C, insbesondere bis zu 350°C, bevorzugt bis zu 280°C erhältlich sind. Die zur Herstellung dieser Präpolymere einzusetzenden Verbindungen wurden zuvor dargelegt.

Des weiteren können zur Herstellung von Polyazolen Monomere eingesetzt werden, die kovalent gebundene Säuregruppen umfassen. Hierzu gehören unter anderem aromatische und heteroaromatische Dicarbonsäuren bzw. deren Derivate, die mindestens eine Phosphonsäuregruppe aufweisen, beispielsweise 2,5-Dicarboxyphenylphosphonsäure, 2,3-Dicarboxyphenylphosphonsäure 3,4-Dicarboxyphenylphosphonsäure und 3,5-Dicarboxyphenylphosphonsäure; aromatische und heteroaromatische Dicarbonsäuren bzw. deren Derivate, die mindestens eine Sulfonsäuregruppe aufweisen, insbesondere 2,5-Dicarboxyphenylsulfonsäure, 2,3-Dicarboxyphenylsulfonsäure 3,4-Dicarboxyphenylsulfonsäure und 3,5-Dicarboxyphenylsulfonsäure; aromatische und heteroaromatische Diaminocarbonsäuren, die mindestens eine Phosphonsäuregruppe umfassen, beispielsweise 2,3-Diamino-5-carboxyphenylphosphonsäure, 2,3-Diamino-6-carboxyphenylphosphonsäure und 3,4-Diamino-6-carboxyphenylphosphonsäure; aromatische und heteroaromatische Diaminocarbonsäuren, die mindestens eine Sulfonsäuregruppe umfassen, beispielweise 2,3-Diamino-5-carboxyphenylsulfonsäure, 2,3-Diamino-6-carboxyphenylsulfonsäure und 3,4-Diamino-6-carboxyphenylsulfonsäure.

Eine gemäß dem zuvor dargelegten Verfahren hergestellte Polyazolmembran kann die zuvor dargelegten optionalen Komponenten enthalten. Hierzu gehören insbesondere Blend-Polymere und Füllstoffe. Blend-Polymere können in der gemäß Schritt i) und/oder Schritt ii) erhaltenen Mischung unter anderem gelöst, dispergiert oder suspendiert vorliegen. Hierbei liegt das Gewichtsverhältnis von Polyazol zu Polymer (B) vorzugsweise im Bereich von 0,1 bis 50, vorzugsweise von 0,2 bis 20, besonders bevorzugt von 1 bis 10, ohne dass hierdurch eine Beschränkung erfolgen soll. Falls das Polyazol erst in Schritt ii) gebildet wird, kann das Gewichtsverhältnis rechnerisch aus dem Gewicht der Monomeren zur Bildung des Polyazols erhalten werden, wobei die bei der Kondensation freigesetzten Verbindungen, beispielsweise Wasser zu berücksichtigen sind.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann beispielsweise bei Schritt i), Schritt ii) und/oder Schritt iii) erfolgen. Des weiteren können diese Additive, falls diese in flüssiger Form vorliegen, auch nach der Polymerisation gemäß Schritt iv) beigefügt werden. Diese Additive wurden zuvor beschrieben.

Bei der in Schritt i) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊ᵢ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden.

Die in Schritt i) erhaltene Mischung wird gemäß Schritt ii) auf eine Temperatur von bis zu 400°C, insbesondere 350°C, vorzugsweise bis zu 280°C, insbesondere 100°C bis 250°C und besonders bevorzugt im Bereich von 200°C bis 250°C erhitzt. Hierbei wird ein Inertgas, beispielsweise Stickstoff oder ein Edelgas, wie Neon, Argon, eingesetzt.

Die in Schritt i) und/oder Schritt ii) hergestellte Mischung kann zusätzlich noch organische Lösungsmittel enthalten. Diese können die Verarbeitbarkeit positiv beeinflussen. So kann beispielsweise die Rheologie der Lösung verbessert werden, so dass diese leichter extrudiert oder gerakelt werden kann.

Die Bildung des flächigen Gebildes gemäß Schritt iii) erfolgt mittels an sich bekannter Maßnahmen (Gießen, Sprühen, Rakeln, Extrusion) die aus dem Stand der Technik zur Polymerfilm-Herstellung bekannt sind. Als Träger sind alle unter den Bedingungen als inert zu bezeichnenden Träger geeignet. Zu diesen Trägern gehören insbesondere Folien aus Polyethylenterephthalat (PET), Polytetrafluorethylen (PTFE), Polyhexafluorpropylen, Copolymere von PTFE mit Hexafluoropropylen, Polyimiden, Polyphenylensulfiden (PPS) und Polypropylen (PP). Des weiteren kann die Bildung der Membran auch direkt auf der mit einer Sperrschicht versehenen Elektrode erfolgen.

Die Dicke des flächigen Gebildes gemäß Schritt iii) beträgt vorzugsweise zwischen 10 und 4000 µm, vorzugsweise zwischen 15 und 3500 µm, insbesondere zwischen 20 und 3000 µm, besonders bevorzugt zwischen 30 und 1500µm und ganz besonders bevorzugt zwischen 50 und 1200µm.

Die Behandlung der Membran in Schritt iv) erfolgt insbesondere bei Temperaturen im Bereich von 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt iv) führt zu einer Verfestigung der Membran und zu einer Abnahme der Schichtdicke und Ausbildung einer Membran. Die verfestigte Membran hat im allgemeinen eine Dicke zwischen 15 und 3000 µm, vorzugsweise 20 und 2000 µm, insbesondere zwischen 20 und 1500 µm.

Die obere Temperaturgrenze der Behandlung gemäß Schritt iv) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt iv) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt iv) erhaltene Membran kann selbsttragend ausgebildet werden, d.h. sie kann vom Träger ohne Beschädigung gelöst und anschließend gegebenenfalls direkt weiterverarbeitet werden.

Die Behandlung gemäß Schritt iv) führt zu einer Härtung der Beschichtung. Falls die Membran direkt auf der Elektrode gebildet wird, erfolgt die Behandlung gemäß Schritt iv) solange, bis die Beschichtung eine genügende Härte aufweist, um zu einer Membran-Elektroden-Einheit verpresst werden zu können. Eine genügende Härte ist gegeben, wenn eine entsprechend behandelte Membran selbsttragend ist. In vielen Fällen genügt jedoch eine geringere Härte. Die gemäß DIN 50539 (Mikrohärtemessung) bestimmte Härte beträgt im allgemeinen mindestens 1 mN/mm², bevorzugt mindestens 5 mN/mm² und ganz besonders bevorzugt mindestens 50 mN/mm², ohne dass hierdurch eine Beschränkung erfolgen soll.

Über den Grad der Hydrolyse, d.h. die Dauer, Temperatur und Umgebungsfeuchtigkeit, ist die Konzentration und die Menge an Phosphorsäure und damit die Leitfähigkeit der Polymermembran einstellbar. Die Konzentration der Phosphorsäure wird als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 13 und 80, insbesondere zwischen 15 und 80, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Bevorzugte Polymermembranen weisen eine hohe Protonenleitfähigkeit auf. Diese beträgt bei Temperaturen von 120°C mindestens 0,1 S/cm, vorzugsweise mindestens 0,11 S/cm, insbesondere mindestens 0,12 S/cm.
Falls die Membranen Polymere mit Sulfonsäuregruppen umfassen, zeigen die Membranen auch bei einer Temperatur von 70°C eine hohe Leitfähigkeit. Die Leitfähigkeit ist unter anderem abhängig vom Sulfonsäuregruppengehalt der Membran. Je höher dieser Anteil, desto besser die Leitfähigkeit bei tiefen Temperaturen. Hierbei kann eine erfindungsgemäße Membran bei geringen Temperaturen befeuchtet werden. Hierzu kann beispielsweise die als Energiequelle eingesetzte Verbindung, beispielsweise Wasserstoff, mit einem Anteil an Wasser versehen werden. In vielen Fällen genügt jedoch auch das durch die Reaktion gebildete Wasser, um eine Befeuchtung zu erzielen.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Eine erfindungsgemäße Membran-Elektroden-Einheit umfasst neben der Polymermembran mindestens zwei Elektroden, die jeweils mit der Membran in Kontakt stehen.

Im allgemeinen umfasst die Elektrode eine Gasdiffusionslage. Die Gasdiffusionslage zeigt im allgemeinen eine Elektronenleitfähigkeit. Üblich werden hierfür flächige, elektrisch leitende und säureresistente Gebilde eingesetzt. Zu diesen gehören beispielsweise Kohlefaser-Papiere, graphitisierte Kohlefaser-Papiere, Kohlefasergewebe, graphitisierte Kohlefasergewebe und/oder flächige Gebilde, die durch Zugabe von Ruß leitfähig gemacht wurden.

Des weiteren enthält die Elektrode mindestens eine Katalysatorschicht wie in Anspruch 1 definiert.

Vorzugsweise wird der Katalysator in Form einer Legierung aus den Metallen (i) und (ii) gebildet. Zusätzlich zu der Legierung können weitere
katalytisch aktive Substanzen, insbesondere Edelmetalle der Platingruppe, d.h. Pt, Pd, Ir, Rh, Os, Ru, oder auch die Edelmetalle Au und Ag, eingesetzt werden. Weiterhin können auch die Oxide der vorgenannten Edelmetalle und/oder NichtEdelmetalle eingesetzt werden.

Die katalytisch aktiven Partikel, die die zuvor genannten Substanzen umfassen, können als Metallpulver, sogenanntes schwarzes Edelmetall, insbesondere Platin und/oder Platinlegierungen, eingesetzt werden. Derartige Partikel weisen im allgemeinen eine Größe im Bereich von 5 nm bis 200 nm, vorzugsweise im Bereich von 7 nm bis 100 nm auf.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisierter Ruß, eingesetzt werden kann. Weiterhin können auch elektrisch leitfähige Metalloxide, wie zum Beispiel SnOₓ, TiOₓ, oder Phosphate, wie z.B. FePOₓ, NbPOₓ, Zr_{y}(POₓ)_{z} als Trägermaterial verwendet werden. Hierbei kennzeichnen die Indices x, y und z den Sauerstoff bzw. Metallgehalt der einzelnen Verbindungen, die in einem bekannten Bereich liegen können, da die Übergangsmetalle unterschiedliche Oxidationsstufen einnehmen können.

Der Gehalt dieser geträgerten Metall-Partikel, bezogen auf das Gesamtgewicht der Metall-Träger-Verbindung, liegt im allgemeinen im Bereich von 1 bis 80 Gew.-%, vorzugsweise 5 bis 60 Gew.-% und besonders bevorzugt 10 bis 50 Gew.-%, ohne dass hierdurch eine Beschränkung erfolgen soll. Die Partikelgröße des Trägers, insbesondere die Größe der Kohlenstoffpartikel, liegt vorzugsweise im Bereich von 20 bis 100 nm, insbesondere 30 bis 60 nm. Die Größe der sich hierauf befindlichen Metallpartikel liegt vorzugsweise im Bereich von 1 bis 20 nm, insbesondere 1 bis 10 nm und besonders bevorzugt 2 bis 6 nm.

Die Größen der unterschiedlichen Partikel stellen Mittelwerte dar und können über Transmissionselektronenmikroskopie oder Pulver-Röntgendiffraktometrie bestimmt werden.

Die Katalysatorschicht hat eine Dicke im Bereich von 0,1 bis 50 µm.

Die erfindungsgemäße Membran-Elektroden-Einheit weist eine Beladung mit Katalysator zwischen 0,01 und 20 g/m², vorzugsweise 0,1 und 10 g/m², (Summe aller Edelmetalle) auf, bezogen auf die Oberfläche der Polymermembran.

Das Gewichtsverhältnis der Edelmetalle der Platingruppe zu den gemäß der elektrochemischen Spannungsreihe unedleren Metallen beträgt zwischen 1:100 bis 100:1.

Die zuvor dargelegten katalytisch aktiven Partikel können im allgemeinen kommerziell erhalten werden.

Die Herstellung der Katalysatoren ist beispielsweise beschrieben in US392512, JP06007679A940118, oder EP450849A911009

Der Katalysator kann unter anderem auf die Gasdiffusionsanlage aufgebracht werden. Anschließend kann die mit einer Katalysatorschicht versehene Gasdiffusionslage mit einer Polymermembran verbunden werden, um zu einer erfindungsgemäßen Membran-Elektroden-Einheit zu gelangen.

In der erfindungsgemäßen Membran-Elektroden-Einheit sind die in der Elektrode enthaltenen Katalysatoren bzw. die an die Gasdiffusionslage angrenzende Katalysatorschicht an der Kathoden- und Anodenseite verschieden. In einer besonders bevorzugten Ausführungsform der Erfindung weist zumindest die Kathodenseite einen Katalysator wie in Anspruch 1 definiert auf.

Erfindungsgemäß kann die Katalysatorschicht durch ein Verfahren aufgebracht werden, bei dem eine Katalysator-Suspension eingesetzt wird. Darüber hinaus können auch Pulver verwendet werden, die den Katalysator umfassen.

Die Katalysatorsuspension enthält eine katalytisch aktive Substanz. Diese wurden zuvor beschrieben.

Des weiteren kann die Katalysatorsuspension übliche Additive enthalten. Hierzu gehören unter anderem Fluorpolymere wie z.B. Polytetrafluorethylen (PTFE), Verdickungsmittel, insbesondere wasserlösliche Polymere wie z.B. Cellulosederivate, Polyvinylalkohol, Polyethylenglykol, und oberflächenaktive Substanzen.

Zu den oberflächenaktiven Substanzen gehören insbesondere ionische Tenside, beispielsweise Fettsäuresalze, insbesondere Natriumlaurat, Kaliumoleat; und Alkylsulfonsäuren, Alkylsulfonsäuresalze, insbesondere Natriumperfluorohexansulfonat, Lithiumperfluorohexansulfonat, Ammoniumperfluorohexansulfonat, Perfluorohexansulfonsäure, Kaliumnonafluorbutansulfonat, sowie nichtionische Tenside, insbesondere ethoxylierte Fettalkohole und Polyethylenglykole.

Des weiteren kann die Katalysator-Suspension bei Raumtemperatur flüssige Bestandteile umfassen. Hierzu gehören unter anderem organische Lösungsmittel, die polar oder unpolar sein können, Phosphorsäure, Polyphosphorsäure und/oder Wasser. Die Katalysatorsuspension enthält vorzugsweise 1 bis 99 Gew.-%, insbesondere 10 bis 80 Gew.-% flüssige Bestandteile.

Zu den polaren, organischen Lösungsmitteln gehören insbesondere Alkohole, wie Ethanol, Propanol und/oder Butanol.

Zu den organischen, unpolaren Lösungsmittel gehören unter anderem bekannte Dünnschichtverdünner, wie Dünnschichtverdünner 8470 der Firma DuPont, der Terpentinöle umfasst.

Besonders bevorzugte Additive stellen Fluorpolymere, insbesondere Tetrafluorethylenpolymere dar. Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Gemäß einem besonderen Aspekt der vorliegenden Erfindung wird die Katalysatorschicht mit einem Pulver-Verfahren aufgebracht. Hierbei wird ein Katalysatorpulver eingesetzt, das zusätzliche Additive, die beispielhaft zuvor dargelegt wurden, enthalten kann.

Zum Aufbringen des Katalysatorpulvers können unter anderem Sprühverfahren und Siebverfahren eingesetzt werden.
Des weiteren kann die Membran durch Einwirken von Hitze in Gegenwart von Sauerstoff noch vernetzt werden. Diese Härtung der Membran verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit ß-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Eine erfindungsgemäße Membran-Elektroden-Einheit zeigt eine überraschend hohe Leistungsdichte. Gemäß einer besonderen Ausführungsform leisten bevorzugte Membran-Elektroden-Einheiten eine Stromdichte von mindestens 0,3 A/cm², bevorzugt 0,4 A/cm², besonders bevorzugt 0,5 A/cm². Diese Stromdichte wird im Betrieb mit reinem Wasserstoff an der Anode und Luft (ca. 20 Vol.-% Sauerstoff, ca. 80 Vol.-% Stickstoff) an der Kathode bei Normaldruck (absolut 1013 mbar, mit offenem Zellausgang) und 0,6V Zellspannung gemessen. Hierbei können besonders hohe Temperaturen im Bereich von 150-200°C, vorzugsweise 160-180°C, insbesondere von 170°C eingesetzt werden.

Die zuvor genannten Leistungsdichten können auch bei geringer Stöchiometrie der Brenngase an beiden Seiten erzielt werden. Gemäß einem besonderen Aspekt der vorliegenden Erfindung ist die Stöchiometrie kleiner oder gleich 2, vorzugsweise kleiner oder gleich 1,5 ganz besonders bevorzugt kleiner oder gleich 1,2.

Gemäß einer besonderen Ausführungsform der vorliegenden Erfindung weist die Katalysatorschicht einen geringen Edelmetallgehalt auf. Der Edelmetall-Gehalt einer bevorzugten Katalysatorschicht, die von einer erfindungsgemäßen Membran umfasst wird, beträgt vorzugsweise höchstens 2 mg/cm², insbesondere höchstens 1 mg/cm², ganz besonders bevorzugt höchstens 0,5 mg/cm².
Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

### Beispiele:

Tabelle 1 zeigt die Zellspannungen von 4 verschiedenen Membran-Elektroden-Einheiten bei Stromdichten von jeweils 0.2 A/cm² und 0.5 A/cm². Die Werte wurden bei 160°C in einer Einzel-Brennstoffzelle mit einer aktiven Fläche von 50cm² aufgenommen. Als Anodengas diente reiner Wasserstoff (bei einer Stöchiometrie 1.2 und einem Druck von 1 barₐ), als Kathodengas diente Luft (bei einer Stöchiometrie 2 und einem Druck von 1 barₐ). Die Zusammensetzung der einzelnen Proben wird im folgenden beschrieben:

### Probe 1:

Anode A: Der Anodenkatalysator ist Pt geträgert auf Kohlenstoff. Die Elektrodenbeladung beträgt 1mg_{Pt}/cm².
Kathode B: Der Kathodenkatalysator ist Pt geträgert auf Kohlenstoff. Die Elektrodenbeladung beträgt 1mg_{Pt}/cm².
Membran A : Als Membran dient eine Phosphorsäure-dotierte Polymermembran, deren Polymer aus Poly(2,2'-m-phenylen)-5,5'-bisbenzimidazol)-co-poly(2,5-pyridin)-5,5'-bisbenzimidazol) besteht.

### Probe 2:

Anode A: Der Anodenkatalysator ist Pt geträgert auf Kohlenstoff. Die Elektrodenbeladung beträgt 1mg_{Pt}/cm².
Kathode B: Der Kathodenkatalysator ist Pt geträgert auf Kohlenstoff. Die Elektrodenbeladung beträgt 1mg_{Pt}/cm².
Membran B : Als Membran dient eine Phosphorsäure-dotierte Polymermembran, deren Polymer aus Poly(2,2'-m-phenylen)-5,5'-bisbenzimidazol) besteht.

### Probe 3:

Anode A: Der Anodenkatalysator ist Pt geträgert auf Kohlenstoff. Die Elektrodenbeladung beträgt 1mg_{Pt}/cm².
Kathode B: Der Kathodenkatalysator ist eine PtNi-Legierung geträgert auf Kohlenstoff. Die Elektrodenbeladung beträgt 1mg_{Pt}/cm². Das Pt:Ni Verhältnis ist 1:1.
Membran A : Als Membran dient eine Phosphorsäure-dotierte Polymermembran, deren Polymer aus Poly(2,2'-m-phenylen)-5,5'-bisbenzimidazol)-co-poly(2,5-pyridin)-5,5'-bisbenzimidazol) besteht.

### Probe 4:

Anode A: Der Anodenkatalysator ist Pt geträgert auf Kohlenstoff. Die Elektrodenbeladung beträgt 1mg_{Pt}/cm².
Kathode B: Der Kathodenkatalysator ist eine PtNi-Legierung geträgert auf Kohlenstoff. Die Elektrodenbeladung beträgt 1mg_{Pt}/cm². Das Pt:Ni Verhältnis ist 1:1.
Membran B : Als Membran dient eine Phosphorsäure-dotierte Polymermembran, deren Polymer aus Poly(2,2'-m-phenylen)-5,5'-bisbenzimidazol) besteht.

Vergleicht man Probe 1 und 2, welche die gleichen Elektroden und Pt-Katalysatoren enthalten, jedoch die unterschiedlichen Membranen A und B, so erkennt man, das durch die Verwendung von Membran B eine nur sehr kleine Erhöhung der Zellspannung um 3 bzw. 4 mV bei 0.2 und 0.5 A/cm² erreicht werden kann. Verändert man bei gleichbleibender Anode mit Pt-Katalysator die Kathode (Probe 3 mit Membran A und Probe 4 mit Membran B) zu einem Legierungskatalysator wie er in dieser Schrift beschrieben ist, so kann die Zellspannung deutlich erhöht werden. So erhöht sich mit Membran A die Zellspannung um 22 mV bei 0.2 A/cm² wenn besagter Legierungskatalysator zum Einsatz kommt. Unter Verwendung von Membran B erhöht sich die Zellspannung bei 0.2 A/cm² um 37 mV wenn ein Legierungskatalysator zum Einsatz kommt.

**Tabelle 1:**

| Nr. | Kathodenkatalysator | Membran | Zellspannung in [V] bei | |
|---|---|---|---|---|
| | | | 0.2 A/cm² | 0.5A/cm² |
| 1 | Pt/C, 1mg_{Pt}/cm² | A | 0.634 | 0.555 |
| 2 | Pt/C, 1 mg_{Pt}/cm² | B | 0.637 | 0.559 |
| 3 | PtNi/C, 1mgₘₑₜₐₗ/cm² | A | 0.656 | 0.571 |
| 4 | PtNi/C, 1mgₘₑₜₐₗ/cm² | B | 0.674 | 0.598 |

## Patentansprüche

1. Membran-Elektroden-Einheit umfassend
A) mindestens eine Polymermembran auf Basis von Polyazolen,
B) mindestens zwei Elektroden, wobei die Polymermembran auf Basis von Polyazolen durch ein Verfahren erhältlich ist umfassend die Schritte:
i) Herstellung einer Mischung umfassend Polyphosphorsäure, mindestens ein Polyazol und/oder mindestens ein oder mehrere Verbindungen, die unter Einwirkung von Wärme gemäß Schritt ii) zur Bildung von Polyazolen geeignet sind,
ii) Erwärmen der Mischung erhältlich gemäß Schritt i) unter Inertgas auf Temperaturen von bis zu 400°C,
iii) Aufbringen einer Schicht unter Verwendung der Mischung gemäß Schritt i) und/oder ii) auf einem Träger,
iv) partielle Hydrolyse der Polyphosphorsäure, die in der in Schritt iii) gebildeten Membran vorliegt,
**dadurch gekennzeichnet**, däss mindestens eine Elektrode einen Katalysator aus
i. einem Edelmetall der Platingruppe, wobei das Edelmetall Platin ist, und
ii. ein gemäß der elektrochemischen Spannungsreihe unedleres Metall
als das unter (i.) genannte Metall, wobei dieses für Nickel steht, aufweist.

2. Membran-Elektroden-Einheit gemäß Anspruch 1, **dadurch gekennzeichnet, dass** die in Schritt i) hergestellte Mischung ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen, und/oder eine oder mehrere aromatischen und/oder heteroaromatischen Diaminocarbonsäuren umfassen, die unter Einwirkung von Wärme gemäß Schritt ii) zur Bildung von Polyazolen geeignet sind.

3. Membran-Elektroden-Einheit gemäß Anspruch 1, **dadurch gekennzeichnet, dass** die in Schritt i) hergestellte Mischung Verbindungen umfasst, die durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C erhältlich sind, die unter Einwirkung von Wärme gemäß Schritt B) zur Bildung von Polyazolen geeignet sind.

4. Membran-Elektroden-Einheit gemäß Anspruch 1 bis 3, **dadurch gekennzeichnet, dass** die zur Bildung von Polyazolen geeigneten Verbindungen als aromatische und/oder heteroaromatische Tetra-Aminoverbindung Verbindungen umfassen, die ausgewählt sind aus der Gruppe bestehend aus 3,3',4,4'-Tetraaminobiphenyl, 2,3,5,6-Tetraaminopyridin und/oder 1,2,4,5-Tetraaminobenzol.

5. Membran-Elektroden-Einheit gemäß Anspruch 1 bis 4, **dadurch gekennzeichnet, dass** die zur Bildung von Polyazolen geeigneten Verbindungen als aromatische und/oder heteroaromatische Carbonsäuren oder deren Derivate, die mindestens zwei Säuregruppen pro Carbonsäure-Monomer enthalten, Verbindungen umfassen die ausgewählt sind aus der Gruppe bestehend aus Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

6. Membran-Elektroden-Einheit gemäß Anspruch 1 bis 5, **dadurch gekennzeichnet, dass** die zur Bildung von Polyazolen geeigneten Verbindungen aromatische Tricarbonsäuren, deren C1-C20-Alkyl-Ester oder C5-C12-ArylEster oder deren Säureanhydride oder deren Säurehalogenide oder Tetracarbonsäuren, deren C1-C20-Alkyl-Ester oder C5-C12-Aryl-Ester oder deren Säureanhydride oder deren Säurehalogenide umfassen.

7. Membran-Elektroden-Einheit gemäß Anspruch 6, **dadurch gekennzeichnet, dass** die aromatische Tricarbonsäuren Verbindungen umfassen, die ausgewählt sind aus der Gruppe bestehend aus 1,3,5-Benzoltricarbonsäure (trimesic acid); 2,4,5-Benzoltricarbonsäure (trimellitic acid); (2-Carboxyphenyl)iminodiessigsäure, 3,5,3'-Biphenyltricarbonsäure; 3,5,4'-Biphenyltricarbonsäure 2,4,6-Pyridintricarbonsäure, Benzol-1,2,4,5-tetracarbonsäuren; Naphthalin-1,4,5,8-tetracarbonsäuren, 3,5,3',5'-Biphenyltetracarbonsäuren, Benzophenontetracarbonsäure, 3,3',4,4'-Biphenyltetracarbonsäure, 2,2',3,3'-Biphenyltetracarbonsäure, 1,2,5,6-Naphthalintetracarbonsäure und/oder 1,4,5,8-Naphthalintetracarbonsäure.

8. Membran-Elektroden-Einheit gemäß Anspruch 6 oder 7, **dadurch gekennzeichnet, dass** der Gehalt an Tricarbonsäure und/oder Tetracarbonsäuren zwischen 0,1 und 30 Mol-%, bezogen auf eingesetzte Dicarbonsäure, beträgt.

9. Membran-Elektroden-Einheit gemäß einem oder mehreren der Ansprüche 1 bis 8, **dadurch gekennzeichnet, dass** die zur Bildung von Polyazolen geeigneten Verbindungen heteroaromatische Dicarbonsäuren, Tricarbonsäuren und/oder Tetracarbonsäuren umfassen, welche mindestens ein Stickstoff, Sauerstoff, Schwefel oder Phosphoratom im Aromaten enthalten.

10. Membran-Elektroden-Einheit gemäß Anspruch 9, **dadurch gekennzeichnet, dass** Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 - Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride eingesetzt werden.

11. Membran-Elektroden-Einheit gemäß Anspruch 1 bis 10, **dadurch gekennzeichnet, dass** die zur Bildung von Polyazolen geeigneten Verbindungen Diaminobenzoesäure und/oder deren Mono- und Dihydrochloridderivate umfassen.

12. Membran-Elektroden-Einheit gemäß einem der Ansprüche 1 bis 11, **dadurch gekennzeichnet, dass** mindestens eine para-Dicarbonsäure eingesetzt wird.

13. Membran-Elektroden-Einheit gemäß einem der Ansprüche 1 bis 12, **dadurch gekennzeichnet, dass** das Polyazol allgemeinen wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 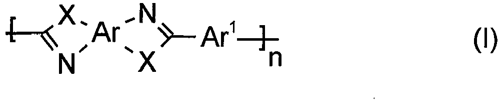 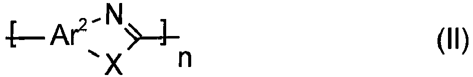 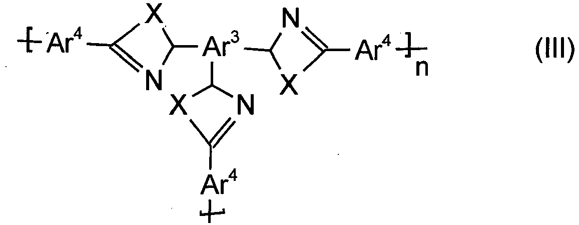 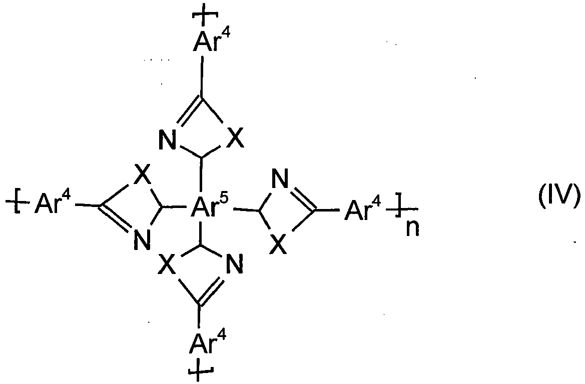 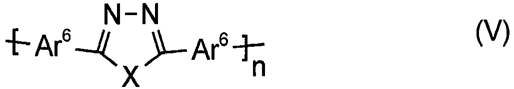 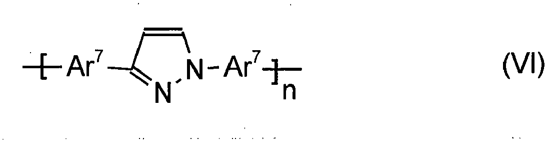 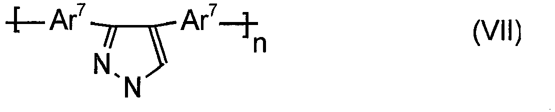 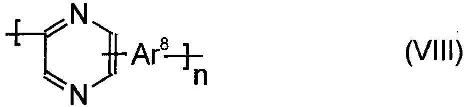 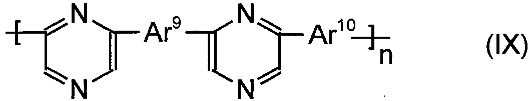 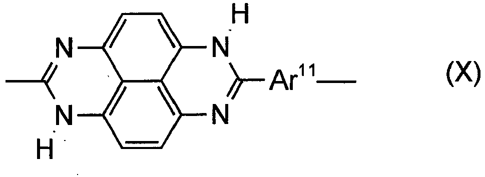 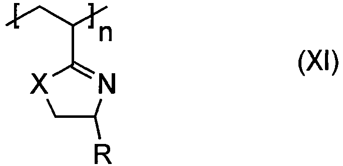 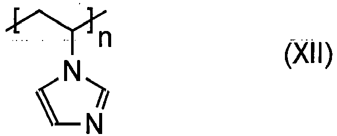 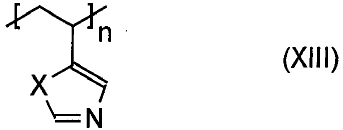 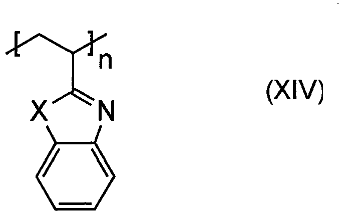 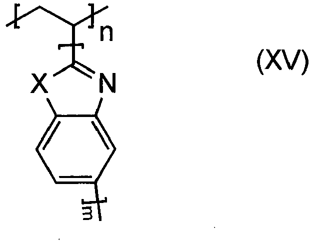 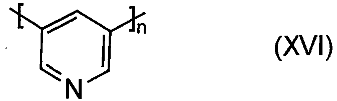 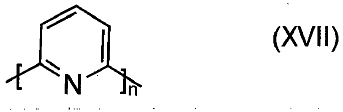 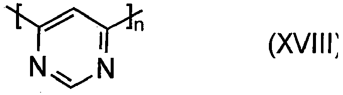 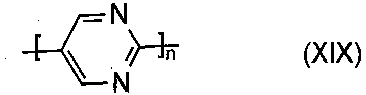 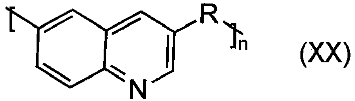 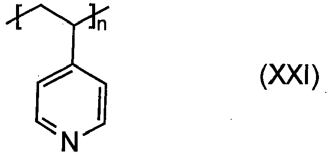 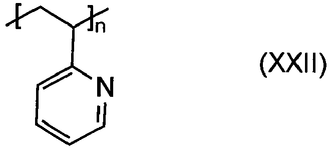 worin
Ar gleich oder verschieden sind und für eine vierbindige aromatische oder heteroaromatische Gruppe, die ein- oder mehrkernig sein kann,
Ar¹ gleich oder verschieden sind und für eine zweibindige aromatische oder heteroaromatische Gruppe, die ein- oder mehrkernig sein kann,
Ar² gleich oder verschieden sind und für eine zwei oder dreibindige aromatische oder heteroaromatische Gruppe, die ein- oder mehrkernig sein kann,
Ar³ gleich oder verschieden sind und für eine dreibindige aromatische oder heteroaromatische Gruppe, die ein- oder mehrkernig sein kann,
Ar⁴ gleich oder verschieden sind und für eine dreibindige aromatische oder heteroaromatische Gruppe, die ein- oder mehrkernig sein kann,
Ar⁵ gleich oder verschieden sind und für eine vierbindige aromatische oder heteroaromatische Gruppe, die ein- oder mehrkernig sein kann,
Ar⁶ gleich oder verschieden sind und für eine zweibindige aromatische oder heteroaromatische Gruppe, die ein- oder mehrkernig sein kann,
Ar⁷ gleich oder verschieden sind und für eine zweibindige aromatische oder heteroaromatische Gruppe, die ein- oder mehrkernig sein kann,
Ar⁸ gleich oder verschieden sind und für eine dreibindige aromatische oder heteroaromatische Gruppe, die ein- oder mehrkernig sein kann,
Ar⁹ gleich oder verschieden sind und für eine zwei- oder drei- oder vierbindige aromatische oder heteroaromatische Gruppe, die ein- oder mehrkernig sein kann,
Ar¹⁰ gleich oder verschieden sind und für eine zwei- oder dreibindige aromatische oder heteroaromatische Gruppe, die ein- oder mehrkernig sein kann,
Ar¹¹ gleich oder verschieden sind und für eine zweibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1-20 Kohlenstoffatome aufweisende Gruppe, als weiteren Rest trägt
R gleich oder verschieden für Wasserstoff, eine Alkylgruppe und eine aromatische Gruppe steht, mit der Maßgabe das R in der Formel (XX) nicht für Wasserstoff steht und
n, m eine ganze Zahl größer gleich 10 ist, aufweist.

14. Membran-Elektroden-Einheit gemäß Anspruch 13, **dadurch gekennzeichnet, dass** n, m eine ganze Zahl größer gleich 100 ist.

15. Membran-Elektroden-Einheit gemäß Anspruch 13, **dadurch gekennzeichnet, dass** die aromatischen oder heteroaromatischen Gruppen sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können, ableiten.

16. Membran-Elektroden-Einheit gemäß Anspruch 13, **dadurch gekennzeichnet, dass** das Substitionsmuster von Ar¹, Ar⁴, Ar⁶, Ar⁷ , Ar⁸, Ar⁹, Ar¹⁰, Ar¹¹ beliebig ist und im Falle vom Phenylen Ar¹, Ar⁴, Ar⁶, Ar⁷, Ar⁸, Ar⁹, Ar¹⁰, Ar¹¹ ortho-, meta- und para-Phenylen ist.

17. Membran-Elektroden-Einheit gemäß Anspruch 1 oder 13, **dadurch gekennzeichnet, dass** es sich bei dem Polyazolen um Polyimidazole, Polybenzthiazole, Polybenzoxazole, Polyoxadiazole, Polyquinoxalines, Polythiadiazole Poly(pyridine), Poly(pyrimidine) und Poly(tetrazapyrene) handelt.

18. Membran-Elektroden-Einheit gemäß Anspruch 13, **dadurch gekennzeichnet, dass** es sich bei dem Polyazolen um ein Copolymer oder ein Blend, das mindestens zwei Einheiten der Formel (I) bis (XXII) enthält, die sich voneinander unterscheiden, handelt.

19. Membran-Elektroden-Einheit gemäß Anspruch 13, **dadurch gekennzeichnet, dass** es sich bei dem Polyazolen um ein Polyazol handelt, das nur Einheiten der Formel (I) und/oder (II) enthält.

20. Membran-Elektroden-Einheit gemäß Anspruch 1 oder 13, **dadurch gekennzeichnet, dass** das Polyazol wiederkehrenden Benzimidazoleinheiten der Formel 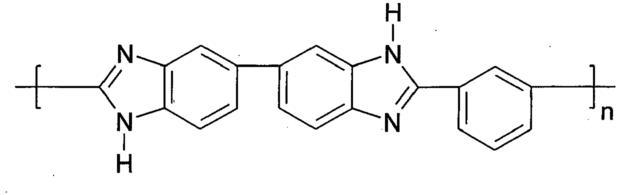 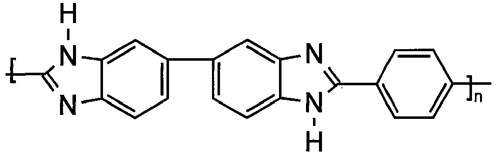 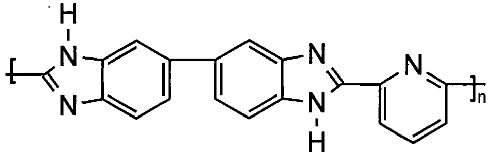 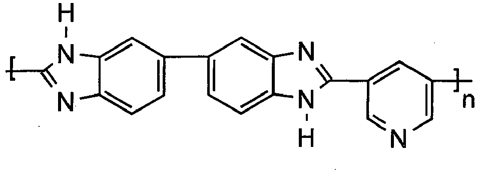 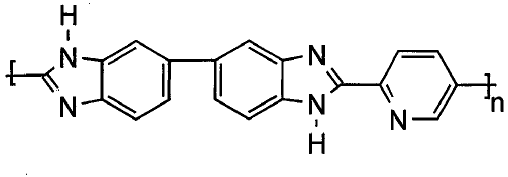 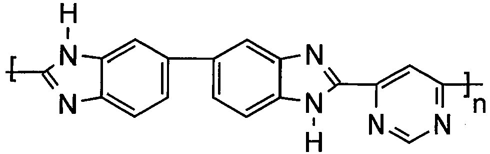 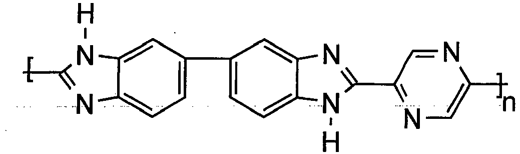 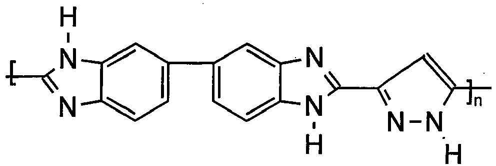 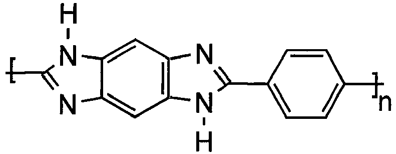 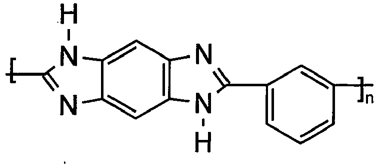 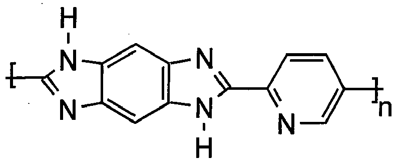 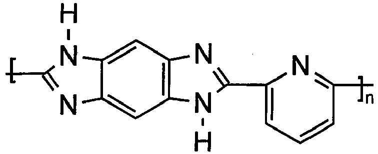 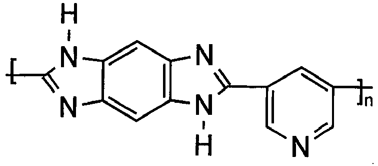 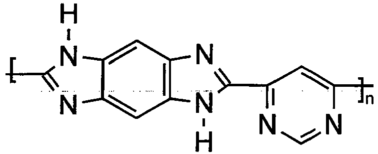 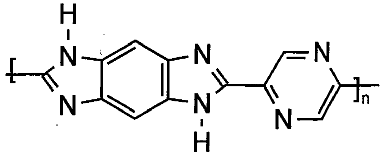 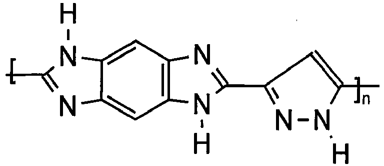 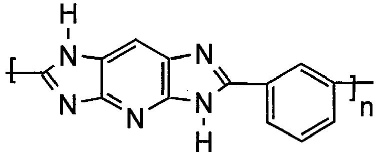 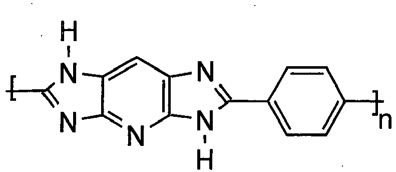 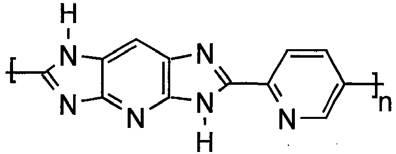 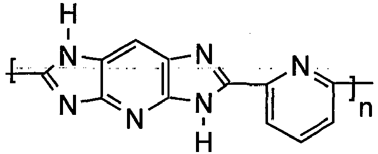 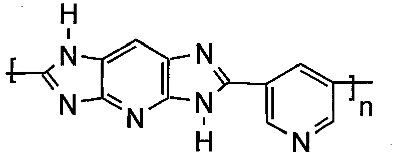 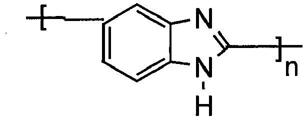 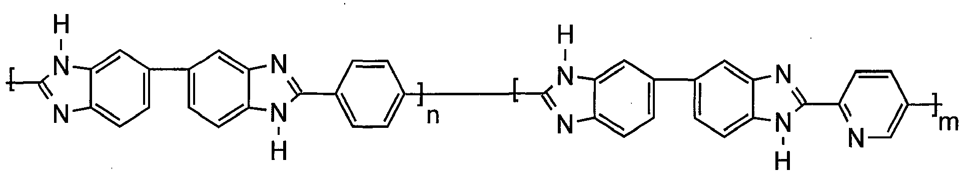 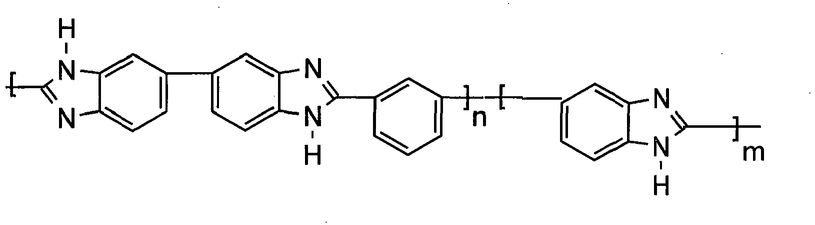 wobei n und m eine ganze Zahl größer gleich 10 ist, enthält.

21. Membran-Elektroden-Einheit gemäß Anspruch 20, **dadurch gekennzeichnet, dass** n und m eine ganze Zahl größer gleich 100 ist.

22. Membran-Elektroden-Einheit gemäß Anspruch 1 oder 13, **dadurch gekennzeichnet, dass** das Polyazol eine Intrinsische Viskosität im Bereich von 0,3 bis 10 dl/g aufweist.

23. Membran-Elektroden-Einheit gemäß Anspruch 22, **dadurch gekennzeichnet, dass** das Polyazol eine Intrinsische Viskosität im Bereich von 1 bis 5 dl/g aufweist.

24. Membran-Elektroden-Einheit gemäß einem oder mehreren der Ansprüche 10 bis 23, **dadurch gekennzeichnet, dass** die Erwärmung gemäß Schritt ii) nach der Bildung eines flächigen Gebildes gemäß Schritt iii) erfolgt.

25. Membran-Elektroden-Einheit gemäß einem der Ansprüche 10 bis 23, **dadurch gekennzeichnet, dass** die nach Schritt iv) gebildete Membran eine Dicke zwischen 15 und 3000 µm hat.

26. Membran-Elektroden-Einheit gemäß einem der Ansprüche 1 bis 25, **dadurch gekennzeichnet, dass** der Katalysator auf die Polymermembran aufgebracht wird.

27. Membran-Elektroden-Einheit gemäß einem oder mehreren der Ansprüche 1 bis 26, **dadurch gekennzeichnet, dass** die Katalysatorschicht eine Dicke im Bereich von 0,1 bis 50 µm aufweist.

28. Membran-Elektroden-Einheit gemäß einem oder mehreren der Ansprüche 1 bis 27, **dadurch gekennzeichnet, dass** der Katalysator katalytisch aktive Partikel umfasst, die eine Größe im Bereich von 5 bis 200 nm aufweisen.

29. Membran-Elektroden-Einheit gemäß einem oder mehreren der Ansprüche 1 bis 28, **dadurch gekennzeichnet, dass** der Katalysator geträgerte katalytisch aktive Partikel umfasst, wobei die Größe der Katalysatorpartikel im Bereich von 1 bis 20 nm liegt.

30. Membran-Elektroden-Einheit gemäß einem oder mehreren der Ansprüche 1 bis 29 **dadurch gekennzeichnet, dass** die Membran-Elektroden-Einheit 0,01 bis 20 g/m² einer katalytisch aktiven Substanz umfasst.

31. Membran-Elektroden-Einheit gemäß Anspruch 30, **dadurch gekennzeichnet, dass** die katalytisch aktiven Partikel Kohlenstoff als Träger enthalten.

32. Membran-Elektroden-Einheit gemäß einem oder mehreren der Ansprüche 1 bis 31, **dadurch gekennzeichnet, dass** Gewichtsverhältnis Platin zu Nickel zwischen 1:100 bis 100:1 beträgt.

33. Brennstoffzelle enthaltend eine oder mehrere Membran-Elektroden-Einheiten gemäß einem oder mehreren der Ansprüche 1 bis 32.

## Claims

1. A membrane electrode unit comprising
A) at least one polymer membrane based on polyazoles,
B) at least two electrodes, wherein the polymer membrane based on polyazoles can be obtained by a process comprising the steps of:
i) preparation of a mixture comprising polyphosphoric acid, at least one polyazole and/or at least one or more compounds which are suitable for the formation of polyazoles with action of heat in accordance with step ii),
ii) heating the mixture obtainable in accordance with step i) under inert gas to temperatures of up to 400°C,
iii) applying a layer using the mixture in accordance with step i) and/or ii) to a support,
iv) partial hydrolysis of the polyphosphoric acid present in the membrane formed in step iii),
**characterized in that** at least one electrode includes a catalyst containing
i. a precious metal of the platinum group, wherein the precious metal is platinum, and
ii. a metal less precious according to the electrochemical series than the metal mentioned in (i.), this (less precious) metal being nickel.

2. The membrane electrode unit according to claim 1, **characterized in that** the mixture produced in step i) comprises one or more aromatic and/or heteroaromatic tetraamino compounds and one or more aromatic and/or heteroaromatic carboxylic acids or their derivatives comprising at least two acid groups per carboxylic acid monomer, and/or one or more aromatic and/or heteroaromatic diaminocarboxylic acids, which are suitable for the formation of polyazoles with action of heat in accordance with step ii).

3. The membrane electrode unit according to claim 1, **characterized in that** the mixture produced in step i) comprises compounds which are obtainable by reaction of one or more aromatic and/or heteroaromatic tetraamino compounds with one or more aromatic and/or heteroaromatic carboxylic acids or their derivatives containing at least two acid groups per carboxylic acid monomer, or of one or more aromatic and/or heteroaromatic diaminocarboxylic acids in the melt at temperatures of up to 400°C, which are suitable for the formation of polyazoles with action of heat in accordance with step B).

4. The membrane electrode unit according to claim 1 to 3, **characterized in that** the compounds suitable for the formation of polyazoles as aromatic and/or heteroaromatic tetraamino compound comprise compounds which are selected from the group consisting of 3,3',4,4'-tetraaminobiphenyl, 2,3,5,6-tetraaminopyridine and/or 1,2,4,5-tetraaminobenzene.

5. The membrane electrode unit according to claim 1 to 4, **characterized in that** the compounds suitable for the formation of polyazoles as aromatic and/or heteroaromatic carboxylic acids or their derivatives containing at least two acid groups per carboxylic acid monomer comprise compounds which are selected from the group consisting of isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid,1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, diphenyl ether-4,4'-dicarboxylic acid, benzophenone-4,4'-dicarboxylic acid, diphenylsulphone-4,4'-dicarboxylic acid, biphenyl-4,4'-dicarboxylic acid, 4-trifluoromethylphthalic acid, 2,2-bis-(4-carboxyphenyl)hexafluoropropane, 4,4'-stilbenedicarboxylic acid, 4-carboxycinnamic acid or their C1-C20 alkyl esters or C5-C12 aryl esters or their acid anhydrides or their acid chlorides.

6. The membrane electrode unit according to claim 1 to 5, **characterized in that** the compounds suitable for the formation of polyazoles comprise aromatic tricarboxylic acids, their C1-C20 alkyl esters or C5-C12 aryl esters or their acid anhydrides or their acid halides, or tetracarboxylic acids, their C1-C20 alkyl esters or C5-C12 aryl esters or their acid anhydrides or their acid halides.

7. The membrane electrode unit according to claim 6, **characterized in that** the aromatic tricarboxylic acids comprise compounds which are selected from the group consisting of 1,3,5-benzenetricarboxylic acid (trimesic acid); 2,4,5-benzenetricarboxylic acid (trimellitic acid); (2-carboxyphenyl)iminodiacetic acid, 3,5,3'-biphenyltricarboxylic acid; 3,5,4'-biphenyltricarboxylic acid; 2,4,6-pyridinetricarboxylic acid, benzene-1,2,4,5-tetracarboxylic acids; naphthalene-1,4,5,8-tetracarboxylic acids, 3,5,3',5'-biphenyltetracarboxylic acids, benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid and/or 1,4,5,8-naphthalenetetracarboxylic acid.

8. The membrane electrode unit according to claim 6 or 7, **characterized in that** the content of tricarboxylic acid and/or tetracarboxylic acids is between 0.1 and 300 mol-%, based on dicarboxylic acid used.

9. The membrane electrode unit according to one or more of claims 1 to 8, **characterized in that** the compounds suitable for the formation of polyazoles comprise heteroaromatic dicarboxylic acids, tricarboxylic acids and/or tetracarboxylic acids containing at least one nitrogen, oxygen, sulphur or phosphorus atom in the aromatic group.

10. The membrane electrode unit according to claim 9, **characterized in that** pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid, benzimidazole-5,6-dicarboxylic acid and their C1-C20 alkyl esters or C5-C12 aryl esters or their acid anhydrides or their acid chlorides are employed.

11. The membrane electrode unit according to claim 1 to 10, **characterized in that** the compounds suitable for the formation of polyazoles comprise diaminobenzoic acid and/or its monohydrochloride and dihydrochloride derivatives.

12. The membrane electrode unit according to any one of claims 1 to 11, **characterized in that** at least one para-dicarboxylic acid is employed.

13. The membrane electrode unit according to any one of claims 1 to 12, **characterized in that** the polyazole contains general recurring azole units of the general formula (I) and/or (II) and/or (III) and/or (IV) and/or (V) and/or (VI) and/or (VII) and/or (VIII) and/or (IX) and/or (X) and/or (XI) and/or (XII) and/or (XIII) and/or (XIV) and/or (XV) and/or (XVI) and/or (XVII) and/or (XVIII) and/or (XIX) and/or (XX) and/or (XXI) and/or (XXII) 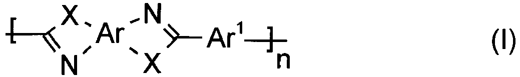 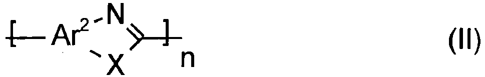 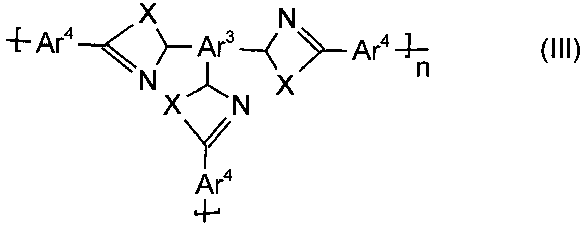 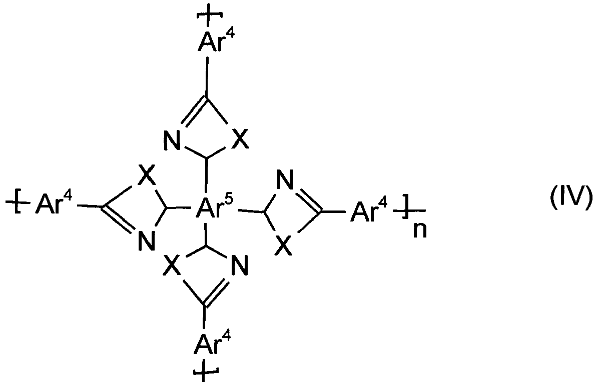 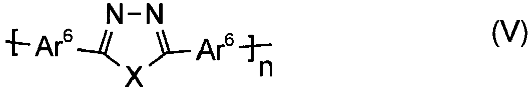 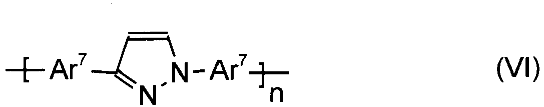 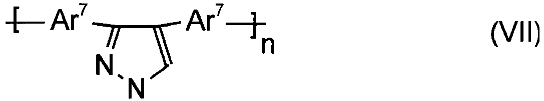 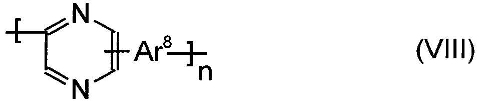 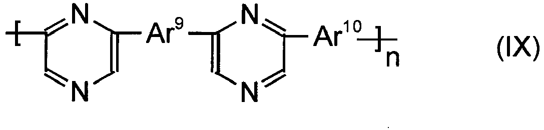 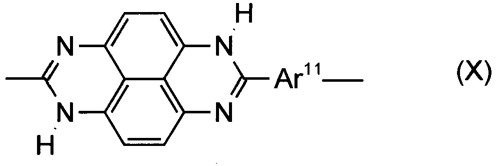 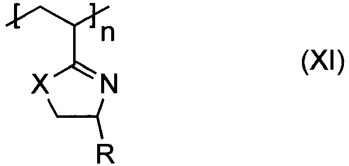 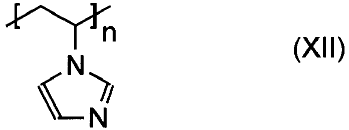 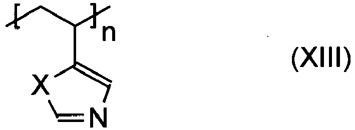 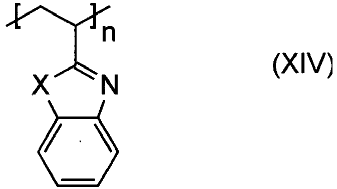 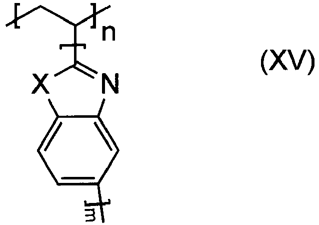 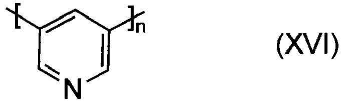 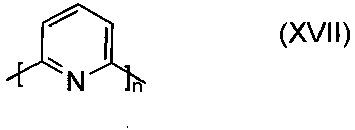 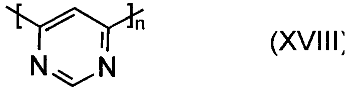 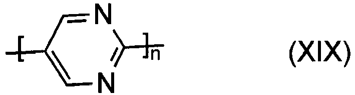 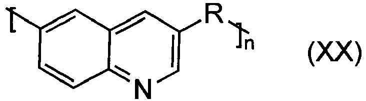 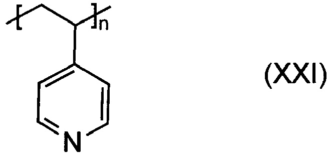 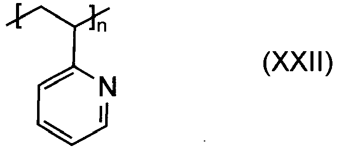 wherein
Ar are identical or different and represent a tetracovalent aromatic or heteroaromatic group which can be mononuclear or polynuclear,
Ar¹ are identical or different and represent a bicovalent aromatic or heteroaromatic group which can be mononuclear or polynuclear,
Ar² are identical or different and represent a bicovalent or tricovalent aromatic or heteroaromatic group which can be mononuclear or polynuclear,
Ar³ are identical or different and represent a tricovalent aromatic or heteroaromatic group which can be mononuclear or polynuclear,
Ar⁴ are identical or different and represent a tricovalent aromatic or heteroaromatic group which can be mononuclear or polynuclear,
Ar⁵ are identical or different and represent a tetracovalent aromatic or heteroaromatic group which can be mononuclear or polynuclear,
Ar⁶ are identical or different and represent a bicovalent aromatic or heteroaromatic group which can be mononuclear or polynuclear,
Ar⁷ are identical or different and represent a bicovalent aromatic or heteroaromatic group which can be mononuclear or polynuclear,
Ar⁸ are identical or different and represent a tricovalent aromatic or heteroaromatic group which can be mononuclear or polynuclear,
Ar⁹ are identical or different and represent a bicovalent or tricovalent or tetracovalent aromatic or heteroaromatic group which can be mononuclear or polynuclear,
Ar¹⁰ are identical or different and represent a bicovalent or tricovalent aromatic or heteroaromatic group which can be mononuclear or polynuclear,
Ar¹¹ are identical or different and represent a bicovalent aromatic or heteroaromatic group which can be mononuclear or polynuclear,
X are identical or different and represent oxygen, sulphur or an amino group which carries a hydrogen atom, a group having 1 - 20 carbon atoms, as a further radical,
R are identical or different and represent hydrogen, an alkyl group and an aromatic group, with the proviso that R in the formula (XX) is not hydrogen, and
n, m are each an integer greater than or equal to 10.

14. The membrane electrode unit according to claim 13, **characterized in that** n, m is an integer greater than or equal to 100.

15. The membrane electrode unit according to claim 13, **characterized in that** the aromatic or heteroaromatic groups are derived from benzene, naphthalene, biphenyl, diphenyl ether, diphenylmethane, diphenyldimethylmethane, bisphenone, diphenylsulphone, thiophene, furan, pyrrole, thiazole, oxazole, imidazole, isothiazole, isoxazole, pyrazole, 1,3,4-oxadiazole, 2,5-diphenyl-1,3,4-oxadiazole, 1,3,4-thiadiazole, 1,3,4-triazole, 2,5-diphenyl-1,3,4-triazole, 1,2,5-triphenyl-1,3,4-triazole, 1,2,4-oxadiazole, 1,2,4-thiadiazole, 1,2,4-triazole, 1,2,3-triazole, 1,2,3,4-tetrazole, benzo[b]thiophene, benzo[b]furan, indole, benzo[c]thiophene, benzo[c]furan, isoindole, benzoxazole, benzothiazole, benzimidazole, benzisoxazole, benzisothiazole, benzopyrazole, benzothiadiazole, benzotriazole, dibenzofuran, dibenzothiophene, carbazole, pyridine, bipyridine, pyrazine, pyrazole, pyrimidine, pyridazine, 1,3,5-triazine, 1,2,4-triazine, 1,2,4,5-triazine, tetrazine, quinoline, isoquinoline, quinoxaline, quinazoline, cinnoline, 1,8-naphthyridine, 1,5-naphthyridine, 1,6-naphthyridine, 1,7-naphthyridine, phthalazine, pyridopyrimidine, purine, pteridine or quinolizine, 4H-quinolizine, diphenyl ether, anthracene, benzopyrrole, benzooxathiadiazole, benzooxadiazole, benzopyridine, benzopyrazine, benzopyrazidine, benzopyrimidine, benzotriazine, indolizine, pyridopyridine, imidazopyrimidine, pyrazinopyrimidine, carbazole, aziridine, phenazine, benzoquinoline, phenoxazine, phenothiazine, acridizine, benzopteridine, phenanthroline and phenanthrene, which optionally also can be substituted.

16. The membrane electrode unit according to claim 13, **characterized in that** Ar¹, Ar⁴, Ar⁶, Ar⁷, Ar⁸, Ar⁹, Ar¹⁰, Ar¹¹ can have any substitution pattern, and in the case of phenylene, for example, Ar¹, Ar⁴, Ar⁶, Ar⁷, Ar⁸, Ar⁹, Ar¹⁰, Ar¹¹ can be ortho-, meta- and para-phenylene.

17. The membrane electrode unit according to claim 1 or 13, **characterized in that** the polyazoles are polyimidazoles, polybenzothiazoles, polybenzoxazoles, polyoxadiazoles, polyquinoxalines, polythiadiazoles, poly(pyridines), poly(pyrimidines) and poly(tetrazapyrenes).

18. The membrane electrode unit according to claim 13, **characterized in that** the polyazole is a copolymer or a blend which contains at least two units of the formulae (I) to (XXII) which differ from one another.

19. The membrane electrode unit according to claim 13, **characterized in that** the polyazole is a polyazole which only contains units of the formulae (I) and/or (II).

20. The membrane electrode unit according to claim 1 or 13, **characterized in that** the polyazole contains recurring benzimidazole units of the formula 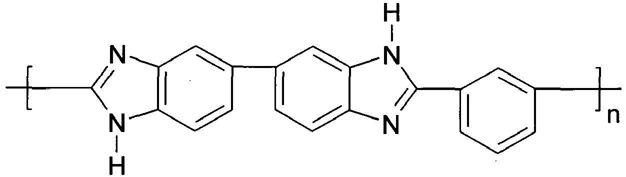 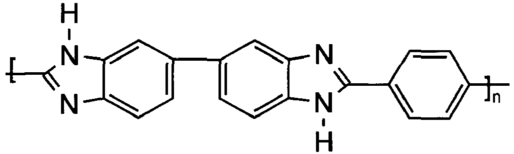 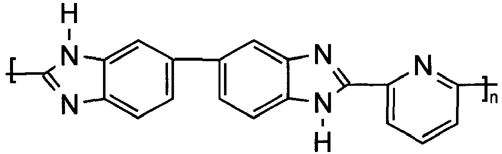 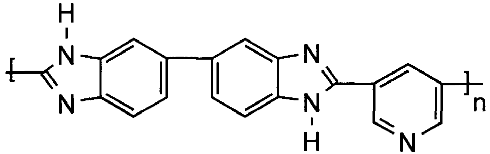 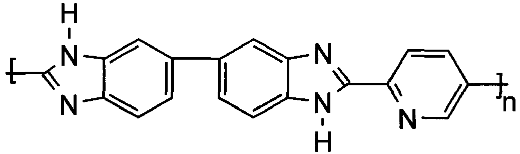 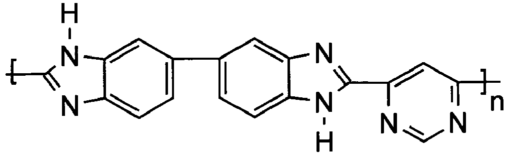 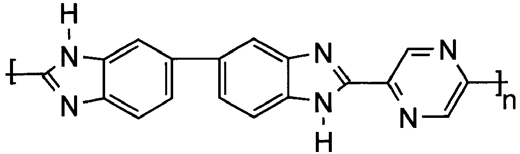 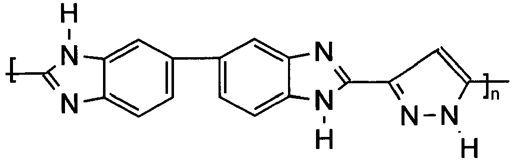 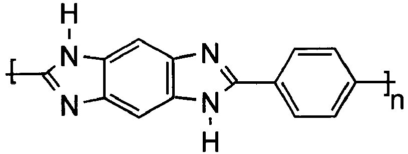 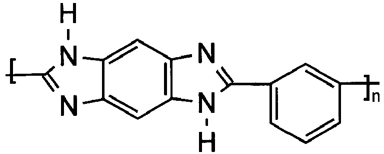 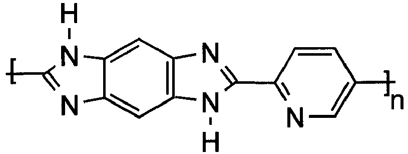 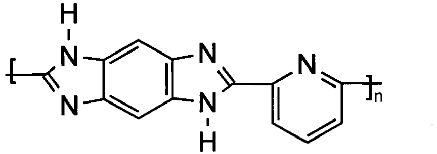 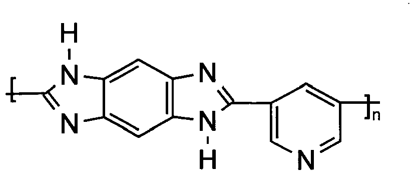 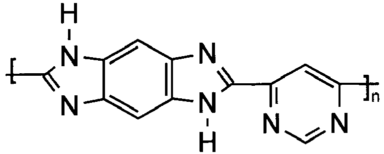 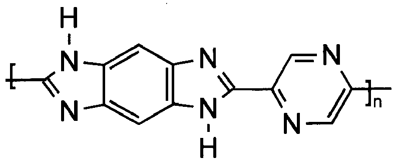 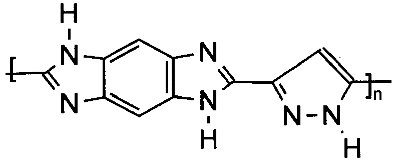 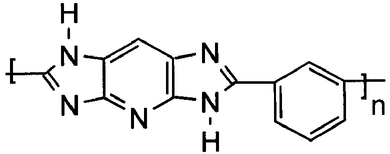 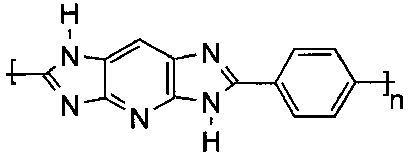 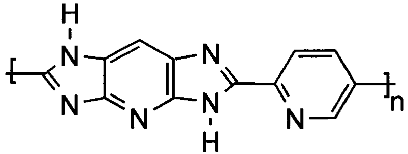 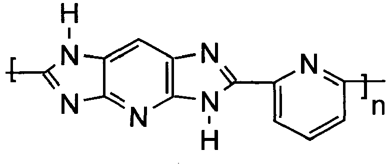 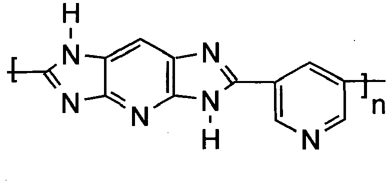 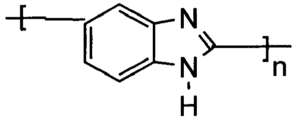 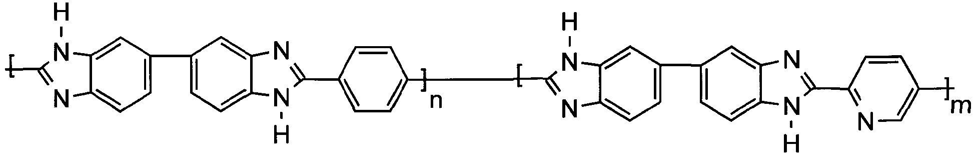 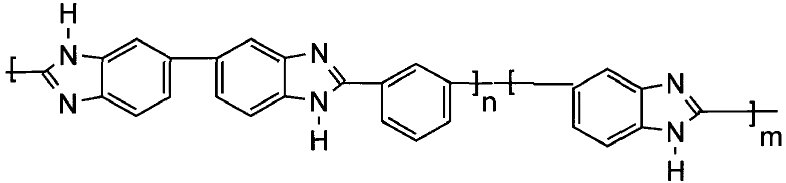 wherein n and m are each an integer greater than or equal to 10.

21. The membrane electrode unit according to claim 20, **characterized in that** n and m are each an integer greater than or equal to 100.

22. The membrane electrode unit according to claim 1 or 13, **characterized in that** the polyazole has an intrinsic viscosity in the range of from 0.3 to 10 dl/g.

23. The membrane electrode unit according to claim 22, **characterized in that** the polyazole has an intrinsic viscosity in the range of from 1 to 5 dl/g.

24. The membrane electrode unit according to one or more of claims 10 to 23, **characterized in that** the heating in accordance with step ii) is performed after the formation of a flat structure in accordance with step iii)..

25. The membrane electrode unit according to any one of claims 10 to 23, **characterized in that** the membrane formed according to step iv) has a thickness between 15 and 3000 µm.

26. The membrane electrode unit according to any one of claims 1 to 25, **characterized in that** the catalyst is applied to the polymer membrane.

27. The membrane electrode unit according to one or more of claims 1 to 26, **characterized in that** the catalyst layer has a thickness in the range of from 0.1 to 50 µm.

28. The membrane electrode unit according to one or more of claims 1 to 27, **characterized in that** the catalyst comprises catalytically active particles which have a size in the range of from 5 to 200 nm.

29. The membrane electrode unit according to one or more of claims 1 to 28, **characterized in that** the catalyst comprises catalytically active particles on a support, the size of the catalyst particles being in the range of from 1 to 20 nm.

30. The membrane electrode unit according to one or more of claims 1 to 29, **characterized in that** the membrane electrode unit comprises 0.01 to 20 g/m² of a catalytically active substance.

31. The membrane electrode unit according to claim 30, **characterized in that** the catalytically active particles include carbon as a support.

32. The membrane electrode unit according to one or more of claims 1 to 31, **characterized in that** the weight ratio of platinum to nickel is between 1:100 to 100:1.

33. A fuel cell containing one or more membrane electrode units according to one or more of claims 1 to 32.

## Revendications

1. Ensemble membrane-électrodes comprenant :
A) au moins une membrane polymère sur la base de polyazoles,
B) au moins deux électrodes,
la membrane polymère sur la base de polyazoles pouvant être obtenue par un procédé comprenant les étapes :
i) de la préparation d'un mélange comprenant de l'acide polyphosphorique, au moins un polyazole et/ou au moins un ou plusieurs composés, qui sous l'action d'une chaleur conformément à l'étape ii) sont aptes à former des polyazoles,
ii) de l'échauffement du mélange pouvant être obtenu selon l'étape i) sous gaz inerte à des températures de jusqu'à 400°C,
iii) de l'application d'une couche en utilisant le mélange selon l'étape i) et/ou ii) sur un support,
iv) de l'hydrolyse partielle de l'acide polyphosphorique qui est présent dans la membrane créée dans l'étape iii),
**caractérisé en ce qu'**au moins une électrode comporte un catalyseur en
i. un métal précieux du groupe des platines, le métal précieux étant du platine et
ii. un métal moins précieux selon la série des potentiels électrochimiques que le métal cité sous (i.), celui-ci signifiant le nickel.

2. Ensemble membrane-électrodes selon la revendication 1, **caractérisé en ce que** le mélange préparé dans l'étape i) contient un ou plusieurs composés tétra-amines aromatiques et/ou hétéroaromatiques et un ou plusieurs acides carboxyliques aromatiques et/ou hétéroaromatiques ou leurs dérivés, qui comprennent au moins deux groupes acides par monomère d'acide carboxylique et/ou un ou plusieurs acides diaminocarboxyliques aromatiques et/ou hétéroaromatiques, qui sous l'action d'une chaleur conformément à l'étape ii) sont aptes à former des polyazoles.

3. Ensemble membrane-électrodes selon la revendication 1, **caractérisé en ce que** le mélange préparé dans l'étape i)comprend des composés qui peuvent être obtenus par transformation d'un ou de plusieurs composés tétra-amines aromatiques et/ou hétéroaromatiques avec un ou plusieurs acides carboxyliques aromatiques et/ou hétéroaromatiques ou leurs dérivés, qui contiennent au moins deux groupes acides par monomère d'acide carboxylique, ou à partir d'un ou de plusieurs acides diaminocarboxyliques dans la masse en fusion, à des températures de jusqu'à 400°C, qui sous l'action d'une chaleur conformément à l'étape B) sont aptes à former des polyazoles.

4. Ensemble membrane-électrodes selon la revendication 1 à 3, **caractérisé en ce que** les composés aptes à former des polyazoles comprennent en tant que composés tétra-amines aromatiques et/ou hétéroaromatiques des composés, qui sont choisis dans le groupe consistant dans le3,3',4,4'-tétraaminobiphényle, la 2,3,5,6-tétraaminopyridine et/ou le 1,2,4,5-tétraaminobenzène.

5. Ensemble membrane-électrodes selon la revendication 1 à 4, **caractérisé en ce que** les composés aptes à former des polyazoles comprennent en tant qu'acides carboxyliques aromatiques et/ou hétéroaromatiques ou leurs dérivés, qui contiennent au moins deux groupes acides par monomère d'acide carboxylique des composés qui sont choisis dans le groupe consistant dans l'acide isophtalique, l'acide téréphtalique, l'acide phtalique, l'acide 5-hydroxyisophtalique, l'acide 4-hydroxyisophtalique, l'acide 2-hydroxytéréphtalique, l'acide 5-aminoisophtalique,l'acide 5-N,N-diméhylaminoisophtalique, l'acide 5-N,N-diéthylaminoisophtalique, l'acide 2,5-dihydroxytéréphtalique, l'acide 2,5-dihydroxyisophtalique, l'acide 2,3-dihydroxyisophtalique, l'acide 2,3-dihydroxyphtalique, l'acide 2,4-dihydroxyphtalique. l'acide 3,4-dihydroxyphtalique, l'acide 3-fluorophtalique, l'acide 5-fluoroisophtalique, l'acide 2-fluoroterphtalique, l'acide tétrafluorophtalique, l'acide tétrafluoroisophtalique, l'acide tétrafluoroterephtalique, l'acide 1,4-naphthalinodicarboxylique, l'acide1,5-naphthalinodicarboxylique, l'acide 2,6-naphthalinodicarboxylique, l'acide 2,7-naphthalinodicarboxylique, l'acide diphénique, l'acide1,8-dihydroxynaphthalino-3,6-dicarboxylique, l'acide diphénylether-4,4'-dicarboxylique, l'acide benzophénono-4,4'-dicarboxylique, l'acide diphénylsulfono-4,4'-dicarboxylique, l'acide biphényle-4,4'-dicarboxylique, l'acide4-trifluorométhylphtalique, le 2,2-bis(4-carboxyphényl)hexafluoropropane,l'acide4,4'-stilbènedicarboxylique, l'acide 4-carboxycinnamique ou leurs alkylesters en C₁ à C₂₀ ou leurs arylesters en C₅ à C₁₂ ou leurs anhydriques d'acide ou leurs chlorures d'acide.

6. Ensemble membrane-électrodes selon la revendication 1 à 5, **caractérisé en ce que** les composés aptes à former des polyazoles comprennent des acides tricarboxyliques aromatiques, leurs alkylesters en C₁ à C₂₀ ou leurs arylesters en C₅ à C₁₂ ou leurs anhydriques d'acide ou leurs halogénures d'acide ou des acides tétracarboxyliques, leurs alkylesters en C₁ à C₂₀ ou leurs arylesters en C₅ à C₁₂ ou leurs anhydriques d'acide ou leurs halogénures d'acide.

7. Ensemble membrane-électrodes selon la revendication 6, caractérisé en ce les acides tricarboxyliques aromatiques comprennent des composés qui sont choisis dans le groupe consistant dans l'acide 1,3,5-benzènetricarboxylique (trimesic acid) ; l'acide 2,4,5-benzènetricarboxylique (trimellitic acid) ; l'acide (2-carboxyphényl)iminodiacétique, l'acide 3,5,3'-biphényltricarboxylique ; l'acide 3,5,4'-biphényltricarboxylique ; l'acide 2,4,6-pyridinetricarboxylique, les acides benzène-1,2,4,5-tétracarboxyliques ; les acides naphthalino-1,4,5,8-tétracarboxyliques, les acides 3,5,3',5'-biphényle-tétracarboxyliques, l'acide benzophénonetétracarboxylique, l'acide 3,3',4,4'-biphényltétracarboxylique, l'acide 2,2',3,3'-biphényltétracarboxylique, l'acide 1,2,5,6-naphthalinotétracarboxylique et/ou l'acide 1,4,5,8-naphthalinotétracarboxylique.

8. Ensemble membrane-électrodes selon la revendication 6 ou 7, **caractérisé en ce que** la teneur en acide tricarboxylique et/ou en acides tétracarboxyliques est comprise entre 0,1 et 30 % en moles, en rapport à l'acide dicarboxylique mis en oeuvre.

9. Ensemble membrane-électrodes selon l'une quelconque ou plusieurs des revendications 1 à 8, **caractérisé en ce que** les composés aptes à former des polyazoles comprennent des acides dicarboxyliques, des acides tricarboxyliques et/ou des acides tétracarboxyliques, lesquels contiennent au moins un atome d'azote, d'oxygène, de soufre ou de phosphore dans l'aromate.

10. Ensemble membrane-électrodes selon la revendication 9, **caractérisé en ce qu'**on met en oeuvre de l'acide pyridine-2,5-dicarboxylique, de l'acide pyridine-3,5-dicarboxylique, de l'acide pyridine-2,6-dicarboxylique, de l'acide pyridine-2,4-dicarboxylique, de l'acide 4-phényle-2,5-pyridinedicarboxylique, de l'acide 3,5-pyrazoledicarboxylique, de l'acide 2,6 -pyrimidinedicarboxylique, de l'acide 2,5-pyrazinedicarboxylique, de l'acide 2,4,6-pyridinetricarboxylique, de l'acide benzimideazole-5,6-dicarboxylique, ainsi que.

11. Ensemble membrane-électrodes selon la revendication 1 à 10, **caractérisé en ce que** les composés aptes à former des polyazoles comprennent des acides diaminobenzoïques et/ou leurs dérivés de monohydrochlorure et de dihydrochlorure.

12. Ensemble membrane-électrodes selon l'une quelconque des revendications 1 à 11, **caractérisé en ce qu'**on met en oeuvre au moins un acide paradicarboxylique.

13. Ensemble membrane-électrodes selon l'une quelconque des revendications 1 à 12, **caractérisé en ce que** le polyazole comporte des unités azole généralement récurrentes de la formule générale (I) et/ou (II) et/ou (III) et/ou (IV) et/ou (V) et/ou (VI) et/ou (VII) et/ou (VIII) et/ou (IX) et/ou (X) et/ou (XI) et/ou (XII) et/ou (XIII) et/ou (XIV) et/ou (XV) et/ou (XVI) et/ou (XVII) et/ou (XVIII) et/ou (XIX) et/ou (XX) et/ou (XXI) et/ou (XXII) 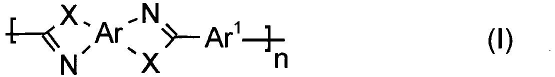 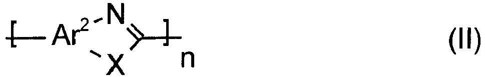 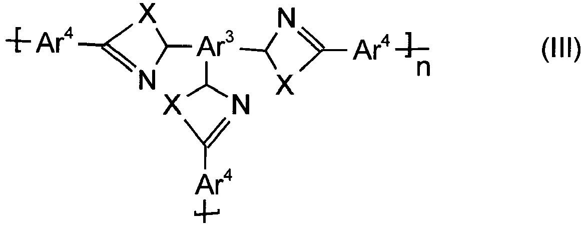 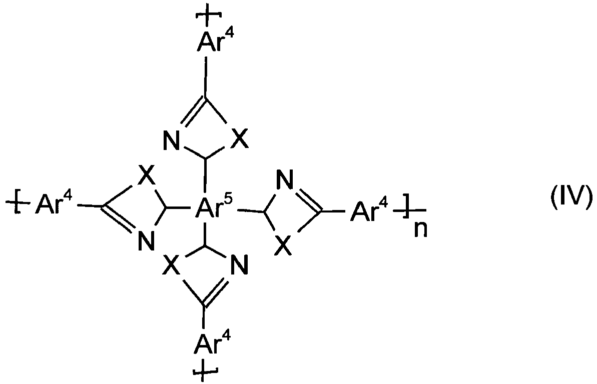 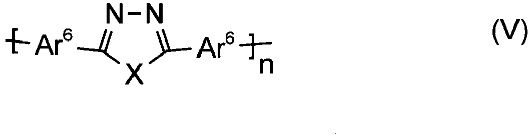 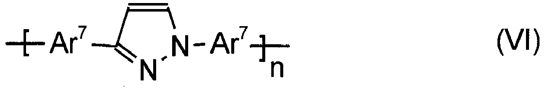 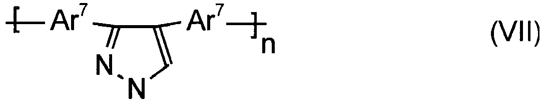 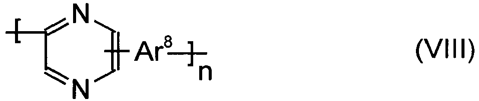 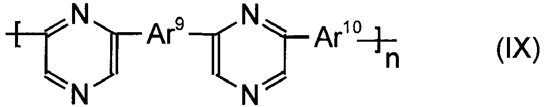 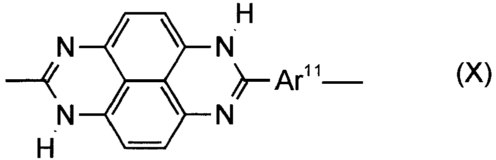 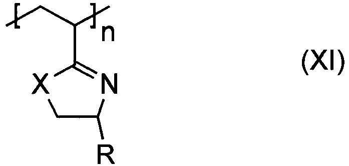 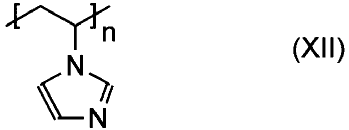 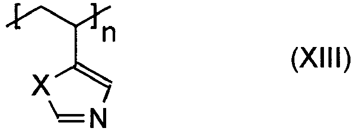 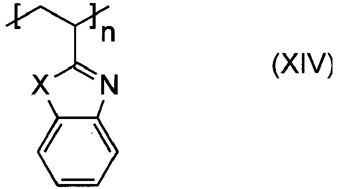 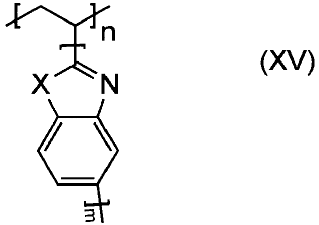 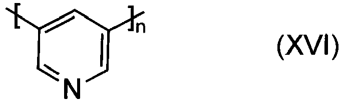 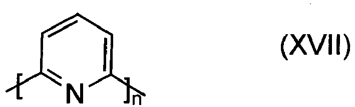 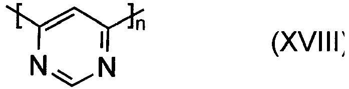 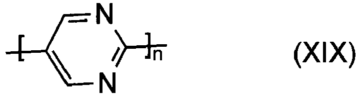 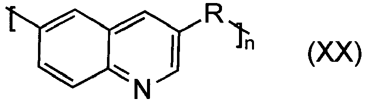 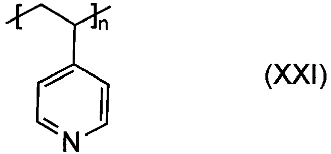 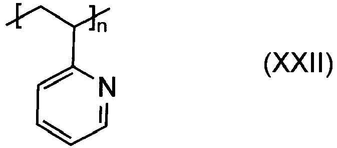 dans laquelle
Ar sont semblables ou différents et correspondent à un groupe aromatique ou hétéroaromatique à quatre liaisons, qui peut avoir un ou plusieurs noyaux,
Ar¹ sont semblables ou différents et correspondent à un groupe aromatique ou hétéroaromatique à deux liaisons, qui peut avoir un ou plusieurs noyaux,
Ar² sont semblables ou différents et correspondent à un groupe aromatique ou hétéroaromatique à deux ou trois liaisons, qui peut avoir un ou plusieurs noyaux,
Ar³ sont semblables ou différents et correspondent à un groupe aromatique ou hétéroaromatique à trois liaisons, qui peut avoir un ou plusieurs noyaux,
Ar⁴ sont semblables ou différents et correspondent à un groupe aromatique ou hétéroaromatique à trois liaisons, qui peut avoir un ou plusieurs noyaux,
Ar⁵ sont semblables ou différents et correspondent à un groupe aromatique ou hétéroaromatique à quatre liaisons, qui peut avoir un ou plusieurs noyaux,
Ar⁶ sont semblables ou différents et correspondent à un groupe aromatique ou hétéroaromatique à deux liaisons, qui peut avoir un ou plusieurs noyaux,
Ar⁷ sont semblables ou différents et correspondent à un groupe aromatique ou hétéroaromatique à deux liaisons, qui peut avoir un ou plusieurs noyaux,
Ar⁸ sont semblables ou différents et correspondent à un groupe aromatique ou hétéroaromatique à trois liaisons, qui peut avoir un ou plusieurs noyaux,
Ar⁹ sont semblables ou différents et correspondent à un groupe aromatique ou hétéroaromatique à deux ou trois liaisons, qui peut avoir un ou plusieurs noyaux,
Ar¹⁰ sont semblables ou différents et correspondent à un groupe aromatique ou hétéroaromatique à deux ou trois liaisons, qui peut avoir un ou plusieurs noyaux,
Ar¹¹ sont semblables ou différents et correspondent à un groupe aromatique ou hétéroaromatique à deux liaisons, qui peut avoir un ou plusieurs noyaux,
X est semblable ou différent et correspond à l'oxygène, au soufre ou à un groupe aminé qui porte en tant que radical supplémentaire un atome d'hydrogène, un groupe comportant de 1 à 20 atomes de carbone,
R est semblable ou différent et correspond à l'oxygène, à un groupe alkyle et un groupe aromatique, avec le critère que R ne correspond pas à l'hydrogène dans la formule (XX) et
n, m est un nombre entier supérieur ou égal à 10.

14. Ensemble membrane-électrodes selon la revendication 13, **caractérisé en ce que** n, m est un nombre entier supérieur ou égal à 100.

15. Ensemble membrane-électrodes selon la revendication 13, **caractérisé en ce que** les groupes aromatiques ou hétéroaromatiques sont dérivés du benzène, de la naphtaline, du biphényle, du diphényléther, du diphénylméthane, du diphényldiméthylméthane, du bisphénone, du diphénylsulfone, du thiophène, du furane, du pyrrole, du thiazole, de l'oxazole, de l'imidazole, de l'isothiazole, de l'isoxazole, du pyrazole, du 1,3,4-oxadiazole, du 2,5-diphényle-1,3,4-oxadiazole, du 1,3,4-thiadiazole, du 1,3,4-triazole, du 2,5-diphényle-1,3,4-triazole, du 1,2,5-tryphényle-1,3,4-triazole, du 1,2,4-oxadiazole, du 1,2,4-thiadiazole, du 1,2,4-triazole, du 1,2,3-triazole, du 1,2,3,4-tétrazole, du benzo[b]thiophène, du benzo[b]furane, de l'indole, du benzo[c]thiophène, du benzo[c]furane, de l'isoindole, du benzoxazole, du benzothiazole, du benzoimidazole, du benzoisoxazole, du benzoisothiazole, du benzopyrazole, du benzothiadiazole, du benzotriazole, du dibenzofurane, du dibenzothiophène, du carbazole, de la pyridine, de la bipyridine, de la pyrazine, du pyrazole, de la pyrimidine, de la pyridazine, de la 1,3,5-triazine, de la 1,2,4-triazine, de la 1,2,4,5-triazine, de la tétrazine, de la chinoline, de l'isochinoline, de la chinoxaline, de la chinazoline, de la cinnoline, de la 1,8-naphthyridine, de la 1,5-naphthyridine, de la 1,6-naphthyridine, de la 1,7-naphthyridine, de la phtalazine, de la pyridopyrimidine, de la purine, de la ptéridine ou de la chinolizine, de la 4H-chinolizine, du diphényléther, de l'anthracène, du benzopyrrole, du benzooxathiadiazole, du benzooxadiazole, de la benzopyridine, de la benzopyrazine, de la benzopyrazidine, de la benzopyrimidine, de la benzotriazine, de l'indolizine, de la pyridopyridine, de l'imidazopyrimidine, de la pyrazinopyrimidine, du carbazole, de l'aciridine, de la phénazine, de la benzochinoline, de la phénoxazine, de la phénothiazine, de l'acridizine, de la benzoptéridine, de la phénanthroline et du phénanthrène, qui le cas échéant peuvent aussi être substitués.

16. Ensemble membrane-électrodes selon la revendication 13, **caractérisé en ce que** le modèle de substitution d' Ar¹, Ar⁴, Ar⁶, Ar⁷, Ar⁸, Ar⁹, Ar¹⁰, Ar¹¹ est quelconque et dans le cas de phénylène, Ar¹, Ar⁴, Ar⁶, Ar⁷, Ar⁸, Ar⁹, Ar¹⁰, Ar¹¹ est de l'orthophénylène, du metaphénylène et du paraphénylène.

17. Ensemble membrane-électrodes selon la revendication 1 ou 13, **caractérisé en ce qu'**en ce qui concerne le polyazole, il s'agit de polyimidazoles, de polybenzothiazoles, de polybenzoxazoles, de polyoxadiazoles, de polyquinoxalines, de polythiadiazoles, de poly(pyridines), de poly(pyrimidines) et de poly(tétrazapyrènes) .

18. Ensemble membrane-électrodes selon la revendication 13, **caractérisé en ce qu'**en ce qui concerne le polyazole, il s'agit d'un copolymère ou d'un mélange, qui contient au moins deux unités de la formule (I) à (XXII) qui sont différentes l'une de l'autre.

19. Ensemble membrane-électrodes selon la revendication 13, **caractérisé en ce qu'**en ce qui concerne le polyazole, il s'agit de polyazole qui ne contient que des unités de la formule (I) et/ou (II).

20. Ensemble membrane-électrodes selon la revendication 1 ou 13, **caractérisé en ce que** le polyazole contient des unités récurrentes de benzimidazoles de la formule : 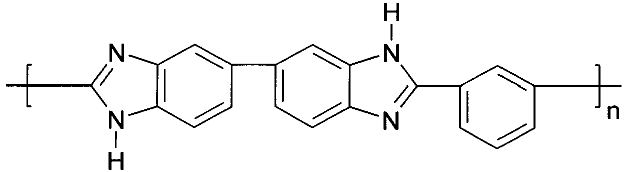 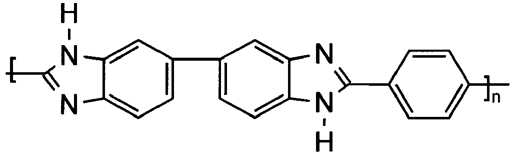 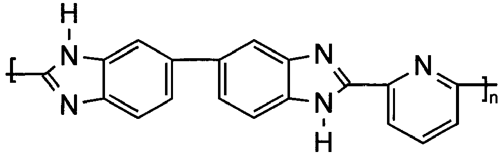 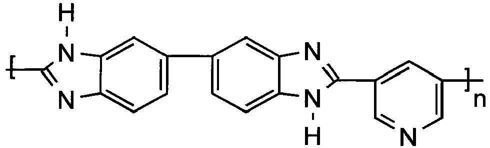 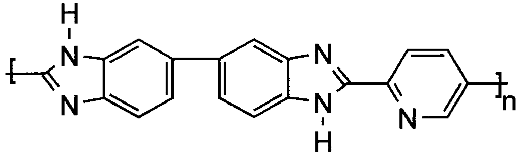 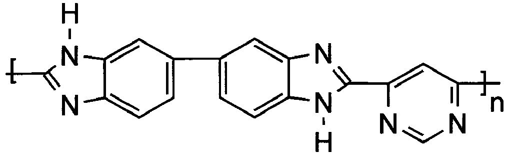 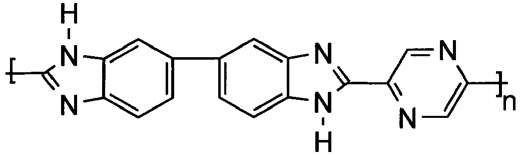 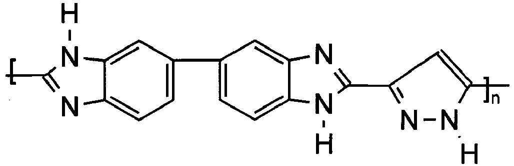 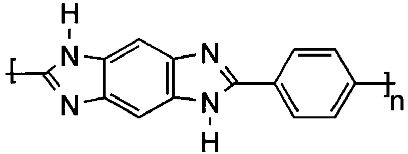 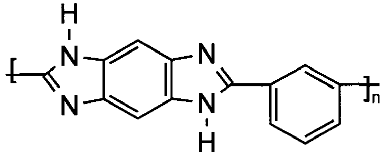 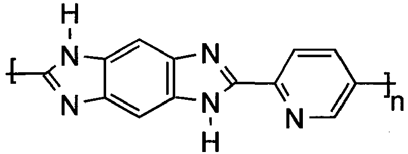 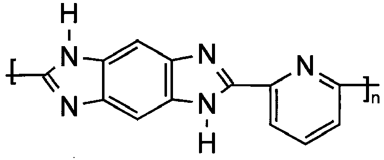 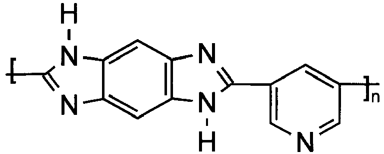 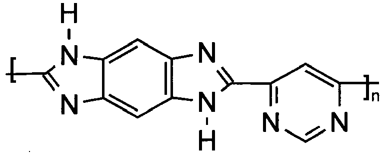 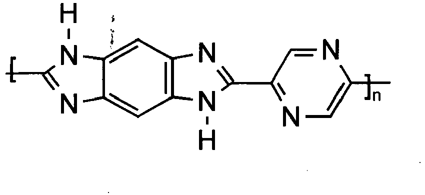 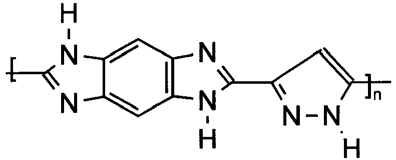 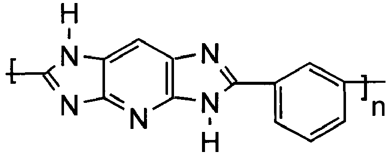 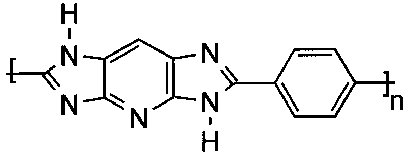 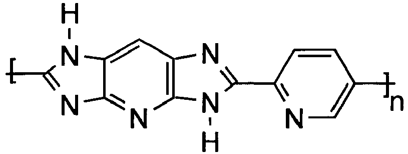 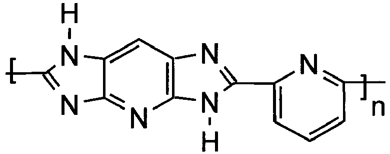 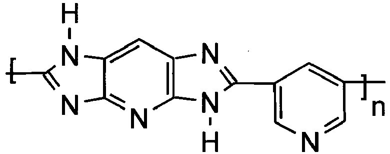 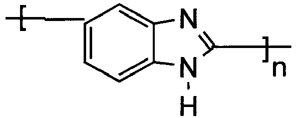 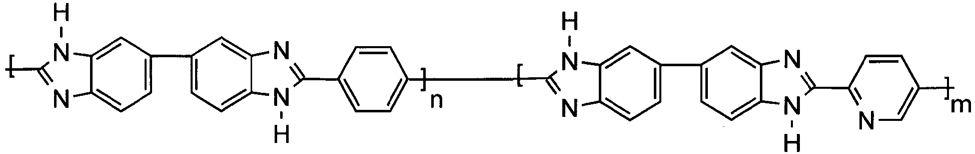 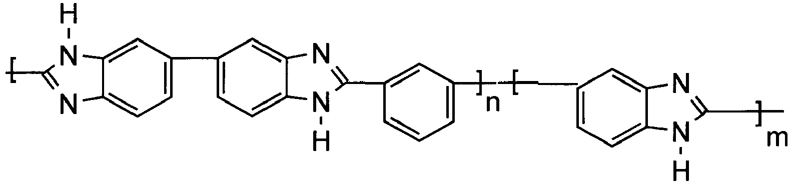 dans laquelle n et m est un nombre entier supérieur ou égal à 10.

21. Ensemble membrane-électrodes selon la revendication 20, **caractérisé en ce que** n und m est un nombre entier supérieur ou égal à 100.

22. Ensemble membrane-électrodes selon la revendication 1 ou 13, **caractérisé en ce que** le polyazole fait preuve d'une viscosité intrinsèque dans l'ordre de 0,3 à 10 dl/g.

23. Ensemble membrane-électrodes selon la revendication 22, **caractérisé en ce que** le polyazole fait preuve d'une viscosité intrinsèque dans l'ordre de 1 à 5 dl/g.

24. Ensemble membrane-électrodes selon l'une quelconque ou plusieurs des revendications 10 à 23, **caractérisé en ce que** l'échauffement selon l'étape ii) a lieu après la formation d'un complexe plan selon l'étape iii) .

25. Ensemble membrane-électrodes selon l'une quelconque des revendications 10 à 23, **caractérisé en ce que** la membrane créée après l'étape iv) présente une épaisseur comprise entre 15 et 3000 µm.

26. Ensemble membrane-électrodes selon l'une quelconque des revendications 1 à 25, **caractérisé en ce qu'**on applique le catalyseur sur la membrane polymère.

27. Ensemble membrane-électrodes selon l'une quelconque ou plusieurs des revendications 1 à 26, **caractérisé en ce que** la couche de catalyseur a une épaisseur dans l'ordre de 0,1 à 50 µm.

28. Ensemble membrane-électrodes selon l'une quelconque ou plusieurs des revendications1 à 27, **caractérisé en ce que** le catalyseur comporte des particules à activité catalytique qui présentent une taille dans l'ordre de 5 à 200 nm.

29. Ensemble membrane-électrodes selon l'une quelconque ou plusieurs des revendications1 à 28, **caractérisé en ce que** le catalyseur comprend des particules supportées à activité catalytique, la taille des particules de catalyseur se situant dans l'ordre de 1 à 20 nm.

30. Ensemble membrane-électrodes selon l'une quelconque ou plusieurs des revendications1 à 29 **caractérisé en ce que** l'ensemble membrane-électrodes comprend de 0,01 à 20 g/m² d'une substance à activité catalytique.

31. Ensemble membrane-électrodes selon la revendication 30, **caractérisé en ce que** les particules à activité catalytique contiennent du carbone en tant que support.

32. Ensemble membrane-électrodes selon l'une quelconque ou plusieurs des revendications1 à 31, **caractérisé en ce que** le rapport en poids du platine au nickel s'élève à de 1:100 à 100:1.

33. Cellule électrochimique contenant un ou plusieurs ensembles membrane-électrodes selon l'une quelconque ou plusieurs des revendications 1 à 32.
